# EUROPÄISCHE PATENTANMELDUNG

(11) **EP 4 484 885 A2**
(43) Veröffentlichungstag der Anmeldung: **01.01.2025**
(21) Anmeldenummer: 24213174.6
(22) Anmeldetag: 18.07.2022
(51) Int. Cl.: G01B 11/02

(54) **AUFNAHMEVORRICHTUNG FÜR EINE KABELFÜHRUNG**

(30) Priorität: 16.07.2021 DE 102021118489
(62) Teilanmeldung aus: 22747043.2
(71) Anmelder: BizLink Industry Germany GmbH, 91154 Roth (DE)
(72) Erfinder: JOESTEN, Bernd, 30880 Laatzen (DE); BOEHM, Alexander, 59302 Oelde (DE)
(74) Vertreter: Frenkel, Matthias Alexander

(57) **Zusammenfassung**

Eine Vorrichtung zur Aufnahme von Kabelführungen weist ein Aufnahmeelement mit mehreren Mantelelementen auf, die dazu eingerichtet sind, gemeinsam einen Vorrichtungsinnenraum mit zumindest zwei Vorrichtungsöffnungen zumindest teilweise zu umschließen. Weiter hat die Vorrichtung zumindest ein Befestigungselement, das an dem Aufnahmeelement angeordnet und dazu ausgebildet ist, lösbar an einer Befestigungsvorrichtung angeordnet zu werden. Jedes der mehreren Mantelelemente ist um eine Rotationsachse schwenkbar an zumindest einem weiteren Mantelelement angeordnet.

## Beschreibung

Hier wird eine Aufnahmevorrichtung für eine Kabelführung, in der technischen Fachsprache auch Dresspack genannt, beschrieben. Kabelführungen, zum Beispiel Wellenschläuche oder Wellschläuche, auch als Wellrohre oder Wellenrohre bezeichnet, werden insbesondere in der Robotertechnik eingesetzt und dienen als Versorgungsleitungen oder als Bündelungsschläuche für Energie-, Signal- und Pneumatikleitungen zur Versorgung von Robotern oder von Teilen von Robotern. Um zu verhindern, dass bewegliche Roboter oder bewegliche Teile von Robotern in einen unerwünschten Kontakt mit den Kabelführungen geraten und diese so möglicherweise beschädigen, werden die Kabelführungen üblicherweise mit Unterstützungsvorrichtungen oder mit Hilfe eines Rückzugsystems am Roboter befestigt, sodass die Kabelführungen, insbesondere die Wellenschläuche, auch während eines Betriebs des Roboters zumindest im Wesentlichen entlang vorgesehener Leitungswege angeordnet verbleiben.

Bekannte Aufnahmevorrichtungen für Kabelführungen, insbesondere Wellenschläuche, umfassen ein Aufnahmeelement in Form eines Rohres oder eines Halbrohres, durch das die zu befestigenden Kabelführungen oder Wellenschläuche hindurchgeführt oder in das die zu befestigenden Kabelführungen oder Wellenschläuche angeordnet werden. Die Aufnahmevorrichtungen werden zum Beispiel an verschiedenen Positionen an einem Roboter oder in dessen Umgebung fixiert, zum Beispiel mit einer Schraub- oder Klebstoffverbindung. Die Anzahl der Aufnahmevorrichtungen richtet sich hierbei nach der für das Leitungsmanagement erforderlichen Anzahl an Kabelführungs- oder Wellenschlauchfixierungen und kann daher variiert werden. Ferner sind auch Roboter oder andere Maschinen bekannt, die bereits vorbereitete Aufnahmevorrichtungen für Kabelführungen, insbesondere für Wellenschläuche, aufweisen.

Beispiele für bekannte Kabelführungen werden durch die Dokumente DE 10 2019 204 618 B4 und DE 10 2018 204 184 A1 offenbart.

Diese bekannten Aufnahmevorrichtungen weisen jedoch mehrere Nachteile auf. Einerseits sind die Aufnahmevorrichtungen für eine Montage oder Anordnung der Kabelführungen oder Wellenschläuche oft schwer zugänglich. Insbesondere ein vollständiges hindurchführen der Kabelführungen oder Wellenschläuche durch ein Aufnahmeelement in Form eines Rohres, zum Beispiel bei der Installation eines Roboters, kann in der betrieblichen Praxis zeitaufwendig und unpraktikabel sein, zum Beispiel im Falle einer nachträglichen Anordnung einer zusätzlichen Aufnahmevorrichtung oder bei einem möglichen Versagen oder einem Verschleiß von vorhandenen Aufnahmevorrichtungen an einen Roboter oder an einer anderen Maschine.

Weiter sind offene, nicht-rohrförmige Aufnahmevorrichtungen für Kabelführungen oder Wellenschläuche einerseits nur von einer bestimmten Seite her zugänglich, was die Anordnung weiter erschwert und bieten zudem weniger Schutz für die aufgenommenen Kabelführungen oder Wellenschläuche, zum Beispiel gegenüber Beschädigungen aufgrund eines Kontakts mit beweglichen Teilen eines Roboters.

Ein weiterer Nachteil bekannter Aufnahmevorrichtungen ist, dass die Kabelführungen oder Wellenschläuche, zum Beispiel durch eine Bewegung von Roboterkomponenten an denen die Aufnahmevorrichtungen angeordnet sind und/oder durch eine Bewegung von Roboterkomponenten an denen die eigentlichen Kabelführungen oder Wellenschläuche angeordnet sind, zumindest teilweise aus den Aufnahmevorrichtungen heraus und/oder hindurchgezogen werden. Diese Beweglichkeit der aufgenommenen Kabelführungen oder Wellenschläuche relativ zu den Aufnahmeelementen ist durchaus beabsichtigt, da bewegliche Roboterarme, an denen die Kabelführungen oder Wellenschläuche angeordnet sind, stets auch eine bestimmte Beweglichkeit oder ein bestimmtes Spiel der an ihnen angeordneten Komponenten, zum Beispiel der Wellenschläuche, erfordern. Dennoch ist es ein Nachteil, dass die Kabelführungen oder Wellenschläuche durch auf sie wirkende Zugkräfte zumindest teilweise aus den Aufnahmevorrichtungen heraus und/oder hindurchgezogen werden können, durch in der Gegenrichtung wirkende Schubkräfte jedoch nicht wieder in der Gegenrichtung bewegt werden, da die Kabelführungen oder Wellenschläuche die Schubkräfte elastisch aufnehmen oder sich aufgrund der Schubkräfte außerhalb der Aufnahmevorrichtung deformieren oder winden. Hierdurch können Teile der Kabelführungen oder Wellenschläuche einer erheblichen und dauerhaft wirkenden Spannkraft ausgesetzt werden, die eine Lebensdauer der Kabelführungen oder Wellenschläuche verkürzt. Zudem ist es ein Nachteil, dass eine Belastung und/oder Bewegung der Kabelführungen oder Wellenschläuche bisher, zumindest nicht ohne manuelle Kontrolle mit externen Sensoren, gemessen oder erfasst werden kann. Dieses erschwert das Erkennen von nicht optimal angeordneten Aufnahmevorrichtungen oder einer zumindest nicht optimal ausgeführten Schlauchführung.

Ferner ist es nachteilig, dass die Aufnahmevorrichtungen nur unflexibel und nur mit Hilfe von geeignetem Werkzeug an den Robotern und/oder an anderen Vorrichtungen angeordnet werden können, wobei in manchen Fällen auch das Einbringen von Bohrungen in eine Roboteroberfläche notwendig, jedoch nicht immer praktikabel ist. Eine schnellere, einfachere und flexiblere Montageoption für die Aufnahmevorrichtungen ist daher wünschenswert.

Es besteht daher die technische Aufgabe, eine verbesserte Aufnahmevorrichtung für Kabelführungen, zum Beispiel für Wellenschläuche, bereitzustellen, die zumindest einen Teil der vorangehend beschriebenen Nachteile überwindet.

Diese Aufgabe wird durch eine Vorrichtung nach dem Anspruch 1 gelöst. Weitere die Aufgabe lösende Vorrichtungen werden durch die auf den Anspruch 1 folgenden Ansprüche definiert.

Eine Vorrichtung zur Aufnahme von Kabelführungen oder Wellenschläuchen weist ein Aufnahmeelement mit mehreren Mantelelementen auf, die dazu eingerichtet sind, gemeinsam einen Vorrichtungsinnenraum mit zumindest zwei Vorrichtungsöffnungen zumindest teilweise zu umschließen oder zu umformen. Jedes der mehreren Mantelelemente ist um eine Rotationsachse schwenkbar an zumindest einem weiteren der mehreren Mantelelemente angeordnet und/oder befestigt. Weiter weist die Vorrichtung zumindest ein Befestigungselement auf, das an dem Aufnahmeelement angeordnet und dazu ausgebildet ist, lösbar an einer Befestigungsvorrichtung angeordnet und/oder befestigt zu werden.

Mit anderen Worten können die Mantelelemente jeweils schwenkbar und/oder rotierbar aneinander angeordnet werden. Die Mantelelemente können insbesondere formschlüssig und/oder bündig miteinander abschließend aneinander angeordnet werden. Ein Vorteil dieser Vorrichtung ist, dass durch ein Schwenken oder Aufklappen eines oder mehrerer Mantelelemente der Innenraum des Aufnahmeelements zur Anordnung von Kabelführungen oder Wellenschläuchen freigegeben werden kann und durch ein anschließendes Zuklappen der Innenraum wieder, bis auf die zumindest zwei Vorrichtungsöffnungen, verschlossen werden kann. Hierdurch werden die Vorteile einer rohrförmigen Aufnahmevorrichtung, nämlich besserer Schutz der aufgenommenen Kabelführungen oder Wellenschläuche gegenüber Beschädigungen und eine bessere Fixierung oder Anordnung der Kabelführungen oder Wellenschläuche in allen Raumrichtungen, mit den Vorteilen einer nicht-rohrförmigen Kabelführungs- oder Wellenschlauchaufnahme, nämlich die Möglichkeit die Kabelführungen oder Wellenschläuche in der Aufnahmevorrichtung anzuordnen ohne diese zum Beispiel vom Schlauchende her durch die Aufnahmevorrichtung hindurchzuführen, vereint.

In einer Variante weist die Vorrichtung ein Aufnahmeelement mit zumindest drei Mantelelementen auf, wobei jedes der drei Mantelelemente um eine Rotationsachse schwenkbar/klappbar oder rotierbar an einem der weiteren Mantelelemente angeordnet ist. Ein Vorteil hierbei ist, dass der Innenraum des Aufnahmeelements weiter geöffnet werden kann, als dieses zum Beispiel mit zwei zueinander schwenkbaren Mantelelementen möglich ist. Im Fall der Verwendung von zwei Mantelelementen kann ein im Wesentlichen zylinderförmiger Innenraum nur soweit zugänglich gemacht werden, dass zumindest eines der Mantelelemente zumindest einen Halbzylinder auf der Grundfläche eines Halbkreises umformt. Dieses erzwingt, dass eine Kabelführung oder ein Wellenschlauch im Wesentlichen orthogonal zur durch die Schwenkung der Mantelelemente entstehenden Anordnungsöffnung in den Innenraum des Aufnahmeelements hinein angeordnet werden muss, welches die Anordnungsoptionen und/oder die Anordnungsflexibilität der Vorrichtung einschränkt. Bei der Verwendung von drei oder mehr zueinander schwenkbaren Mantelelementen kann der Innenraum des Aufnahmeelements jedoch mit einem nahezu beliebigen Öffnungswinkel, zum Beispiel mit einem Öffnungswinkel von 270° freigegeben werden, welches die Anordnung einer Kabelführung oder eines Wellenschlauchs aus einer zumindest nahezu beliebigen Richtung erlaubt. Dieses ist bei der Anordnung von Kabelführungen oder Wellenschläuchen an Robotern oder an anderen Maschinen ein Vorteil, da die Aufnahmevorrichtungen oder Dresspacks für zum Beispiel einen Monteur in der betrieblichen Praxis nicht aus jeder Raumrichtung frei zugänglich sind.

Weiter kann die Vorrichtung zumindest eine Verschlussvorrichtung aufweisen, die an einem oder an mehreren Mantelelementen angeordnet und dazu ausgebildet ist, zumindest zwei der mehreren Mantelelemente lösbar aneinander zu befestigen. Die Verschlussvorrichtung kann insbesondere zumindest ein in einer zu der/den Rotationsachse/n parallelen Richtung verschiebliches und/oder bewegliches Verriegelungselement aufweisen, welches zur Herstellung und/oder Freigabe der lösbaren Befestigung eingerichtet ist.

Die Verschlussvorrichtung kann zum Beispiel eine oder mehrere Verschlussschienen aufweisen, die jeweils an einem der schwenkbaren Mantelelemente angeordnet sind. Die Verschlussschienen können dazu ausgebildet sein, mit einer Ausformung und/oder einer weiteren Verschlussschiene an einem jeweils weiteren Mantelelement in einen, optional zumindest teilweise materialschlüssigen, Eingriff gebracht oder angeordnet zu werden. Das Verriegelungselement kann insbesondere dazu ausgebildet sein, eine optional zumindest teilweise materialschlüssige und/oder formschlüssige Anlage der Verschlussschiene/n aneinander und/oder an dem weiteren Mantelelement zu fixieren oder zur Lösung freizugeben.

Die zumindest eine Verschlussschiene kann zumindest abschnittsweise einen zumindest teilweise T-förmigen Querschnitt aufweisen. Optional kann die Verschlussschiene dazu eingerichtet sein, zumindest abschnittsweise mit einem Teil eines weiteren Mantelelements, insbesondere formschlüssig, in Anlage gebracht zu werden, und/oder gemeinsam mit dem Teil des weiteren Mantelelements zumindest abschnittsweise einen zumindest teilweise T-förmigen Querschnitt auszubilden. Das Verriegelungselement kann dazu eingerichtet sein, zumindest abschnittsweise mit der Verschlussschiene, insbesondere materialschlüssig und/oder formschlüssig, in Anlage gebracht zu werden, zum Beispiel durch einen Bediener der Vorrichtung.

Die Verschlussschiene und/oder eines der Mantelelemente können eine oder mehrere Rastnasen aufweisen, die dazu eingerichtet sind, das verschiebliche Verriegelungselement in einer vorbestimmten Position lösbar zu fixieren und/oder einer Verschiebung oder Bewegung des Verriegelungselements in einer zu der/den Rotationsachsein parallelen Richtung einen Druckwiderstand entgegenzusetzen.

In einer Variante können die Rastnasen dazu eingerichtet sein, das verschiebliche Verriegelungselement in drei voneinander verschiedenen vorbestimmten Positionen lösbar zu fixieren und/oder einer Verschiebung oder Bewegung des Verriegelungselements in einer zu der/den Rotationsachse/n parallelen Richtung einen Druckwiderstand entgegenzusetzen, zum Beispiel wenn das Verriegelungselement aus einer der drei vorbestimmten Positionen herausbewegt wird.

Das Verriegelungselement kann optional, insbesondere in einer im Wesentlichen zu der/den Rotationsachse/n orthogonalen Richtung verlaufende, Handhabungsrillen aufweisen. Die Handhabungsrillen können einem Bediener der Vorrichtung die Betätigung des Verriegelungselements erleichtern.

Weiter kann das Verriegelungselement in einer Variante dazu eingerichtet sein, formschlüssig mit einem Zentralelement in Anlage gebracht zu werden, insbesondere wenn die Verschlussvorrichtung zumindest zwei der mehreren Mantelelemente lösbar aneinander befestigt. Mit anderen Worten kann das Verriegelungselement von einem Bediener der Vorrichtung in eine Position bewegt werden, in der es einerseits an einem Zentralelement der Verschlussvorrichtung anliegt und andererseits zwei der mehreren Mantelelemente lösbar aneinander befestigt.

Das Verriegelungselement und/oder ein an einem Mantelelement angeordneter Gegenkontor können dazu ausgebildet sein, einander gegenseitig in einer in einer vorbestimmten Position, insbesondere in einer Verriegelungsposition, zu fixieren.

Ein Vorteil der Verschlussvorrichtung ist, dass sie das Öffnen oder Freigeben sowie das Verschließen, Umformen oder Zuklappen des Innenraums des Aufnahmeelements ohne zusätzliches Werkzeug, d.h. werkzeugfrei, erlaubt. Dieses vereinfacht und beschleunigt die Anordnung einer Kabelführung oder eines Wellenschlauchs in der Vorrichtung.

Optional können eines oder mehrere der Mantelelemente, insbesondere an einer Vorrichtungsöffnung, eine in den Innenraum hinein ausgeformte Führungsgeometrie aufweisen. Die Führungsgeometrie kann dazu eingerichtet sein, eine Positionierung einer Kabelführung oder eines Wellenschlauchs vorzugeben und/oder zu beeinflussen und/oder zu halten. Hierdurch kann insbesondere eine bestimmte vorgesehene Anordnung der Kabelführung oder des Wellenschlauchs im Innenraum der Vorrichtung sichergestellt und/oder verbessert werden.

In einer Variante kann die Vorrichtung zumindest ein im Vorrichtungsinnenraum angeordnetes Längenausgleichselement mit zumindest einer Feder aufweisen. Die zumindest eine Feder kann an einem der Mantelelemente und/oder an einer Führungsgeometrie fixiert oder, insbesondere unelastisch, angeordnet sein und eine Kabelführungs- oder Wellenschlauchaufnahme aufweisen, wobei die Kabelführungs- oder Wellenschlauchaufnahme dazu eingerichtet ist, an einer Kabelführung oder an einem Wellenschlauch fixiert oder, insbesondere unelastisch, angeordnet zu werden. Das Längenausgleichselement und/oder die zumindest eine Feder können dazu eingerichtet sein, einen im Vorrichtungsinnenraum der der Vorrichtung aufgenommene Kabelführung, insbesondere einen aufgenommenen Wellenschlauch, zu umformen oder zu umgeben. Mit anderen Worten kann eine Kabelführung, insbesondere ein Wellenschlauch, durch die Feder oder durch einen von der Feder umformten Federinnenraum hindurchgeführt werden.

Die Feder kann eine Metallfeder, insbesondere eine Stahlfeder sein. Die Feder kann insbesondere mit einem ersten Federende an einem der Mantelelemente und/oder an einer Führungsgeometrie fixiert oder, insbesondere unelastisch, angeordnet sein. Optional kann die Feder mit einem oder mehreren Federanordnungselementen an einem oder an mehreren Mantelelementen angeordnet sein. Die Kabelführungs- oder Wellenschlauchaufnahme kann insbesondere an einem zweiten Federende fixiert oder, insbesondere unelastisch, angeordnet sein. Optional kann die Kabelführungs- oder Wellenschlauchaufnahme einen Aufnahmering aufweisen, der zur material- und/oder kraftschlüssigen Aufnahme oder Fixierung einer Kabelführung, insbesondere eines Wellenschlauchs oder Wellenschlauchabschnitts, eingerichtet ist. Mit anderen Worten können die Kabelführung oder der Wellenschlauch im Wesentlichen unelastisch an der Feder befestigt werden.

Das Längenausgleichelement mit der Feder kann insbesondere dazu eingerichtet sein, eine an der Kabelführungs- oder Wellenschlauchaufnahme fixierte oder angeordnete Kabelführung, insbesondere einen Wellenschlauch, mit einer Materialspannung in einer zu der/den Rotationsachse/n parallelen Richtung aufzunehmen.

Optional kann die Feder die an ihr befestigte Kabelführung oder den an ihr befestigten Wellenschlauch zumindest abschnittsweise bis zu einem vorbestimmten Maß stauchen und/oder zusammendrücken, sodass die Kabelführung oder der Schlauch im Falle einer auf ihn ausgeübten Zugkraft zumindest bis zu einem vorbestimmten Maß expandieren und/oder (aus-)gedehnt werden kann, wobei im Gegenzug die an der Kabelführung oder an dem Wellenschlauch befestigte Feder durch die Zugkraft gespannt wird. Lässt die auf die Kabelführung oder den Wellenschlauch ausgeübte Zugkraft nach, lässt auch die auf die Feder wirkende Zugkraft nach. Die Feder staucht oder drückt die Kabelführung oder den Wellenschlauch in diesem Fall erneut bis zu einem vorbestimmten Maß zusammen.

Weiter kann die Feder im Vorrichtungsinnenraum optional mit einer Vorspannung oder Materialspannung, insbesondere vorkomprimiert, angeordnet werden, sodass die Feder zum Beispiel bereits ohne eine auf eine durch die Vorrichtung aufgenommene Kabelführung, insbesondere auf einen Wellenschlauch, ausgeübte Zugkraft eine Kraft, insbesondere einen Gegendruck, auf die aufgenommene Kabelführung, insbesondere auf einen aufgenommenen Wellenschlauch, ausübt.

Ein Vorteil des im Vorrichtungsinnenraum angeordneten Längenausgleichselements mit der Feder ist, dass eine Kabelführung oder ein Wellenschlauch im Falle einer Roboterbewegung zwar temporär zur Kompensation der Roboterbewegung bewegt, insbesondere auch teilweise aus der Vorrichtung zur Aufnahme von Kabelführungen oder Wellenschläuchen herausbewegt, werden kann, jedoch nach einem Abschluss der Roboterbewegung und/oder nach einer Rückkehr des Roboters in die Ausgangsposition durch die Feder wieder in die ursprüngliche Anordnungsposition zurückbewegt wird. Die Kabelaufnahme oder der Wellenschlauch wird somit mit einem bestimmten Spiel, insbesondere mit einem bestimmten Spiel in der Kabelaufnahmen- oder Schlauchrichtung aufgenommen, wobei ein ungewolltes dauerhaftes Herausbewegen der Kabelaufnahme oder des Wellenschlauchs aus der Vorrichtung und/oder ein (Über-)Dehnen der Kabelaufnahme oder des Wellenschlauchs verhindert werden kann.

In weiteren Ausführungsformen kann die Vorrichtung auch mehrere, insbesondere zwei Federn aufweisen, wobei jede dieser mehreren Federn mit einem der Mantelelemente und/oder einer Führungsgeometrie fixiert oder, insbesondere unelastisch, angeordnet sein kann und/oder jeweils eine Kabelführungs- oder Wellenschlauchaufnahme aufweisen kann.

Alternativ oder ergänzend kann das Längenausgleichselement anstatt der Feder oder den Federn auch ein anderes elastisches Element, zum Beispiel ein Gummi, oder auch ein elektromagnetisches System und/oder ein Motorsystem aufweisen, welches jeweils wie die vorangehend beschriebene/n Feder/n an einem der Mantelelemente oder einer Führungsgeometrie und an einer Kabelführung, insbesondere an einem Wellenschlauch, befestigt und/oder befestigbar ist. Das elastische Element oder das elektromagnetische System und/oder das Motorsystem können hierbei die Funktionen der vorangehend beschriebenen Feder/n übernehmen und/oder ersetzen. Ferner können das elastische Element oder das elektromagnetische System und/oder das Motorsystem zu den vorangehend beschriebenen Federn korrespondierende Merkmale aufweisen, insbesondere eine Kabelführungs- oder Wellenschlauchaufnahme, welche in Funktion und/oder Ausformung den vorangehend beschriebenen Elementen des Längenausgleichselements entsprechen.

In einer Ausführungsform können eines, mehrere und/oder alle Mantelelemente, insbesondere an einer Außenseite der Mantelelemente, eine insbesondere eingeprägte Vertiefung, eine Führung, eine Sicke oder eine Nut aufweisen. Die Mantelelemente, insbesondere die Außenseite der Mantelelemente können ein Fertigungsmaterial mit Kunststoff, insbesondere mit Polymermaterial, Metall, Kohlenfasern, Kohlefaserverbundstoff, Keramik und/oder Glasmaterial aufweisen.

Ein Vorteil der insbesondere eingeprägten Führungen, Vertiefungen, Sicken oder Nuten ist, dass diese die Mantelelemente versteifen können und/oder eine Griffigkeit der Mantelelemente verbessern können.

Ferner können die Mantelelemente insbesondere dazu eingerichtet sein, mit einer der Außenseite gegenüberliegenden Innenseite an einer durch das Aufnahmeelement aufgenommenen Kabelaufnahme, insbesondere an einem Wellenschlauch, und/oder an dem Längenausgleichselement anzuliegen. Hierdurch kann eine Führung für die aufgenommene Kabelaufnahme und/oder das Längenausgleichselement hergestellt sein, welche insbesondere eine korrekte Anordnung der Kabelaufnahme oder des Wellenschlauchs im Vorrichtungsinnenraum erleichtert und/oder verbessert und eine Bewegungsbahn für die Feder des Längenausgleichselements, insbesondere in Form von Führungsschienen, definiert oder herstellt. Die Bewegung der Feder mit der Kabelführungs- oder Wellenschlauchaufnahme kann hierdurch ohne wesentliches radiales Spiel erfolgen, welches einerseits zur Materialschonung der Feder beiträgt und ein Stauchen oder Auseinanderziehen der Feder erleichtert. Ferner kann ein Ausknicken der Feder verhindert werden. Die Mantelelemente können insbesondere mit jenen Bereichen der Innenseite an einer durch das Aufnahmeelement aufgenommenen Kabelführung, insbesondere an einem Wellenschlauch, und/oder an dem Längenausgleichselement anliegen und/oder in Anlage gebracht werden, die einer insbesondere eingeprägten Vertiefung, Führung, Sicke oder Nut in der Außenseite der Mantelelemente gegenüberliegen.

Optional kann zumindest ein Rotationselement, zum Beispiel ein Metallstift oder ein Kunststoffstift, um das zumindest zwei der Mantelelemente um eine Rotationsachse schwenkbar gelagert sind, durch die zwei Mantelelemente, die um das Rotationselement schwenkbargelagert sind, vollständig umschlossen sein. Mit anderen Worten können zumindest zwei Mantelelemente schwenkbar oder rotierbar durch ein, insbesondere zylinderförmiges, Rotationselement gelagert sein, wobei eines der Mantelelemente oder beide Mantelelemente im Zusammenwirken ein Gehäuse für das Rotationselement ausbilden, welches das Rotationselement zumindest teilweise, beispielsweise vollständig, umgibt.

Ein Vorteil hierbei ist, dass das Rotationselement vor in die Lagerung eindringendem Schmutz und vor in die Lagerung eindringenden Flüssigkeiten geschützt werden kann und eine Schmierung des Rotationselements in dem durch die Mantelelemente gebildeten Gehäuse verbleiben kann. Ferner wird die Handhabung der Vorrichtung dadurch erleichtert, dass ein Bediener der Vorrichtung nicht unbeabsichtigt in Kontakt mit einer Schmierung des Rotationselements oder Lagers gelangen kann. Darüber hinaus schützt das durch die Mantelelemente gebildete Gehäuse das Rotationselement vor Beschädigungen.

Der von den Mantelelementen umschlossene Vorrichtungsinnenraum kann einen zumindest im Wesentlichen zylinderförmigen Abschnitt aufweisen, der zur Aufnahme des Längenausgleichselements und/oder einer Führungsgeometrie und/oder zumindest eines Teils eine Kabelführung, insbesondere eines Wellenschlauchs, ausgebildet ist. Der Vorrichtungsinnenraum kann zum Beispiel einen zumindest im Wesentlichen zylinderförmigen Abschnitt aufweisen, der zur Aufnahme von Wellenschläuchen mit einem Durchmesser von beispielsweise ca. 70 mm, 56 mm oder 48 mm eingerichtet ist. Die zumindest zwei Vorrichtungsöffnungen, die auch nach einem Schwenken, Rotieren, Zuklappen oder Verschließen der Mantelelemente stets erhalten bleiben können und insbesondere zur Durchführung einer durch die Vorrichtung aufzunehmenden Kabelführung, insbesondere eines Wellenschlauchs, geeignet sind, können insbesondere Öffnungen eines zumindest im Wesentlichen zylinderförmigen Abschnitts des Vorrichtungsinnenraum sein.

Weiter kann der von den Mantelelementen umschlossene Vorrichtungsinnenraum einen zumindest im Wesentlichen quaderförmigen Abschnitt aufweisen, der insbesondere zur Aufnahme eines oder mehrerer Sensorelemente eingerichtet ist. Der zumindest eine im Wesentlichen quaderförmige Abschnitt des Vorrichtungsinnenraums kann zumindest teilweise von einem und/oder zumindest teilweise von mehreren Mantelelementen umschlossen sein. Ein Vorteil des zumindest einen im Wesentlichen quaderförmigen Abschnitts des Vorrichtungsinnenraums ist, dass dieser Abschnitt des Vorrichtungsinnenraums insbesondere zur Anordnung zusätzlicher Vorrichtungselemente, insbesondere von Sensorelementen, gut geeignet ist und dass die so im Vorrichtungsinnenraum angeordneten Vorrichtungselemente ebenfalls durch die Mantelelemente vor Verunreinigung und Beschädigung geschützt werden.

Zum Beispiel kann die Vorrichtung zumindest ein Sensorelement aufweisen, das dazu eingerichtet ist, eine Federausdehnung oder Federauslenkung der Feder des Längenausgleichselements zu erfassen, wobei das zumindest eine Sensorelement zum Beispiel ein optisch erfassendes Sensorelement sein kann. Alternativ kann das Sensorelement auch ein nicht-optisch erfassendes Sensorelement sein, zum Beispiel ein Zugkraftsensor oder ein Federsensor oder ein kapazitiver Sensor. In einer Variante kann das Sensorelement auch ein magnetisch erfassendes Sensorelement sein, zum Beispiel ein Hall-Sensor.

In einer Ausführungsform kann das Befestigungselement der Vorrichtung dazu eingerichtet sein, mit einer Schraubverbindung an der Befestigungsvorrichtung angeordnet zu werden oder angeordnet zu sein. Mit anderen Worten kann das Befestigungselement an der Befestigungsvorrichtung anordenbar sein. Alternativ oder ergänzend kann das Befestigungselement eine Zahnung aufweisen und dazu eingerichtet sein, mit der Zahnung formschlüssig in eine korrespondierende (Gegen-)Zahnung der Befestigungsvorrichtung einzugreifen. Die Zahnung des Befestigungselements und/oder die Zahnung der Befestigungsvorrichtung können dazu eingerichtet sein, jeweils mehrere mögliche Anordnungspositionen des Befestigungselements an der Befestigungsvorrichtung zuzulassen. Mit anderen Worten kann die Zahnung des Befestigungselements und/oder die Zahnung der Befestigungsvorrichtung dazu eingerichtet sein, eine Anordnungsposition des Befestigungselements an der Befestigungsvorrichtung nicht festzulegen. Die Anordnungsposition des Befestigungselements an der Befestigungsvorrichtung kann variabel oder veränderbar sein.

Optional kann das Befestigungselement dazu eingerichtet sein, mit einem oder mehreren Befestigungsbolzen und/oder mit einem oder mehreren Befestigungsclips lösbar an der Befestigungsvorrichtung befestigt zu werden. Der oder die Befestigungsbolzen und/oder der oder die Befestigungsclip/s können jeweils sowohl in vorbereitete Öffnungen in dem Befestigungselement als auch in vorbereitete Öffnungen in der Befestigungsvorrichtung eingreifen. Weiter können die Befestigungsbolzen und/oder die Befestigungsclips insbesondere jeweils in einer zu der/den Rotationsachse/n parallelen Richtung oder in einer zu der/den Rotationsachse/n orthogonalen Richtung in die vorbereiteten Öffnungen in dem Befestigungselement und in die vorbereiteten Öffnungen in der Befestigungsvorrichtung einführbar sein. Ein Vorteil hierbei ist, dass das Befestigungselement ohne zusätzliches und/oder spezielles Werkzeug mit der Befestigungsvorrichtung verbunden werden und/oder auch wieder von dieser gelöst werden kann. Die Montage der Vorrichtung zur Aufnahme von Kabelführungen oder Wellenschläuchen kann hierdurch vereinfacht und beschleunigt werden.

Die Zahnung des Befestigungselements kann an einer Oberfläche des Befestigungselements angeordnet sein. Alternativ oder ergänzend kann die Zahnung des Befestigungselements auch an einem Verriegelungsfortsatz des Befestigungselements angeordnet sein.

Der Verriegelungsfortsatz kann um eine Befestigungselementachse schwenkbar an einem weiteren Bestandteil des Befestigungselements, zum Beispiel an einem Befestigungselementgrundkörper, angeordnet sein. Die Befestigungselementachse kann insbesondere parallel zu der/den Rotationsachse/n der Mantelelemente angeordnet sein.

Die an dem Verriegelungsfortsatz angeordnete Zahnung kann dazu eingerichtet sein, durch eine Schwenkung des Verriegelungsfortsatzes um die Befestigungselementachse zumindest teilweise formschlüssig mit der Zahnung der Befestigungsvorrichtung in Eingriff gebracht zu werden. Weiter kann die an dem Verriegelungsfortsatz angeordnete Zahnung dazu eingerichtet sein, durch eine Schwenkung des Verriegelungsfortsatzes um die Befestigungselementachse zumindest teilweise von der Zahnung der Befestigungsvorrichtung gelöst zu werden.

Ein Vorteil des schwenkbaren Verriegelungselements mit einer Zahnung ist, dass eine Oberfläche des Befestigungselements auch ohne Zahnung ausgebildet werden kann, was ein Gleiten oder Verschieben des Befestigungselements über die Zahnung einer Befestigungsvorrichtung erlaubt. Das Befestigungselement kann somit zuerst in einer Richtung parallel zur Befestigungselementachse über die Zahnung einer Befestigungsvorrichtung verschoben oder bewegt werden und, nachdem eine gewünschte Position in einer Richtung parallel zur Befestigungselementachse erreicht wurde, mittels des schwenkbaren Verriegelungselements an der Befestigungsvorrichtung fixiert werden. Das Fixieren des Befestigungselements an der Befestigungsvorrichtung kann dadurch erreicht werden, dass eine an dem Verriegelungsfortsatz angeordnete Zahnung durch eine Schwenkung des Verriegelungsfortsatzes um die Befestigungselementachse zumindest teilweise formschlüssig mit der Zahnung der Befestigungsvorrichtung in Eingriff gebracht wird.

Optional kann der Verriegelungsfortsatz zumindest ein, insbesondere elastisch deformierbares, Verriegelungsfortsatzeinrastelement aufweisen, das dazu eingerichtet ist, den Verriegelungsfortsatz an dem Aufnahmeelement und/oder an einem der Mantelelemente des Aufnahmeelements und/oder an der Befestigungsvorrichtung zu fixieren, wenn die an dem Verriegelungsfortsatz angeordnete Zahnung mit der Zahnung der Befestigungsvorrichtung in Eingriff gebracht wird.

Ein Vorteil des, insbesondere elastisch deformierbaren, Verriegelungsfortsatzeinrastelements ist, dass hierdurch ein unberücksichtigtes Ablösen des Verriegelungsfortsatzes von dem Aufnahmeelement und/oder von der Befestigungsvorrichtung verhindert werden kann. Optional kann der Verriegelungsfortsatz mit dem Verriegelungsfortsatzeinrastelement dazu eingerichtet sein, gegen einen Druckwiderstand wieder von dem Aufnahmeelement und/oder von einem der Mantelelemente des Aufnahmeelements und/oder von der Befestigungsvorrichtung abgelöst zu werden, sodass die durch das Verriegelungsfortsatzeinrastelement bewirkte Fixierung aufgehoben wird.

Optional kann eine Vorrichtung zur Aufnahme von Kabelführungen oder Wellenschläuchen eines oder mehrere Dichtungselemente aufweisen, die jeweils an und/oder in einer der Vorrichtungsöffnungen angeordnet und/oder dazu eingerichtet sind, an einer zumindest teilweise aufgenommenen Kabelführung, zum Beispiel an einem Wellenschlauch mit einem Durchmesser von beispielsweise ca. 70 mm, 56 mm oder 48 mm, anzuliegen. Die Dichtungselemente können jeweils dazu eingerichtet sein, eine der Vorrichtungsöffnungen im Zusammenwirken mit der aufgenommenen Kabelführung oder mit dem aufgenommenen Wellenschlauch zumindest im Wesentlichen staub- und/oder flüssigkeitsdicht zu verschließen. Hierdurch kann einer Verschmutzung des Vorrichtungsinnenraums entgegengewirkt werden.

Eine weitere Vorrichtung zur Aufnahme von Kabelführungen oder Wellenschläuchen weist ein Aufnahmeelement mit zumindest einem Mantelelement, das einen Vorrichtungsinnenraum mit zumindest zwei Vorrichtungsöffnungen zumindest teilweise umschließt oder umformt, auf. Zumindest ein Befestigungselement ist an diesem Aufnahmeelement angeordnet und dazu ausgebildet, lösbar an einer Befestigungsvorrichtung angeordnet oder befestigt zu werden. Weiter umfasst die Vorrichtung zumindest ein im Vorrichtungsinnenraum angeordnetes Längenausgleichselement mit einer Feder, die an dem Mantelelement fixiert oder angeordnet ist und eine Kabelführungs- oder Wellenschlauchaufnahme aufweist, wobei die Kabelführungs- oder Wellenschlauchaufnahme dazu eingerichtet ist, an einer Kabelführung oder an einem Wellenschlauch fixiert oder angeordnet zu werden. Zudem weist die Vorrichtung zumindest ein im Vorrichtungsinnenraum angeordnetes erstes Sensorelement auf, das dazu eingerichtet ist, eine Veränderung des Längenausgleichselements und/oder eine Federausdehnung oder Federauslenkung der Feder des Längenausgleichselements zu erfassen.

Die Feder ist an einem der Mantelelemente und/oder an einer Führungsgeometrie eines Mantelelements fixiert oder, insbesondere unelastisch, angeordnet und weist eine Kabelführungs- oder Wellenschlauchaufnahme auf, wobei die Kabelführungs- oder Wellenschlauchaufnahme dazu eingerichtet ist, an einer Kabelführung oder an einem Wellenschlauch fixiert oder, insbesondere unelastisch, angeordnet zu werden. Das Längenausgleichselement und/oder die Feder können dazu eingerichtet sein, eine im Vorrichtungsinnenraum der Vorrichtung aufgenommene Kabelführung, insbesondere einen Wellenschlauch zu umformen oder zu umgeben. Mit anderen Worten kann eine Kabelführung oder ein Wellenschlauch durch die Feder oder durch einen von der Feder umformten Federinnenraum hindurchgeführt werden.

Die Feder kann eine Metallfeder, insbesondere eine Stahlfeder sein. Die Feder kann insbesondere mit einem ersten Federende an einem der Mantelelemente und/oder an einer Führungsgeometrie eines Mantelelements fixiert oder, insbesondere unelastisch, angeordnet sein. Optional kann die Feder mit einem oder mehreren Federanordnungselementen an einem oder an mehreren Mantelelementen und/oder an einer Führungsgeometrie eines Mantelelements angeordnet sein. Die Kabelführungs- oder Wellenschlauchaufnahme kann insbesondere an einem zweiten Federende fixiert oder, insbesondere unelastisch, angeordnet sein. Optional kann die Kabelführungs- oder Wellenschlauchaufnahme einen Aufnahmering aufweisen, der zur material- und/oder kraftschlüssigen Aufnahme oder Fixierung einer Kabelführung, zum Beispiel eines Wellenschlauchs oder Wellenschlauchabschnitts, eingerichtet ist. Mit anderen Worten kann die Kabelführung oder der Wellenschlauch im Wesentlichen unelastisch an der Feder befestigt werden.

Das Längenausgleichelement mit der Feder kann insbesondere dazu eingerichtet sein, eine an der Kabelführungs- oder Wellenschlauchaufnahme fixierten oder angeordnete Kabelführung, insbesondere einen Wellenschlauch, mit einer Materialspannung in einer zu der/den Rotationsachse/n parallelen Richtung aufzunehmen.

Optional kann die Feder die an ihr befestigte Kabelführung oder den an ihr befestigten Wellenschlauch zumindest abschnittsweise bis zu einem vorbestimmten Maß stauchen und/oder zusammendrücken, sodass der Schlauch im Falle einer auf ihn ausgeübten Zugkraft zumindest bis zu einem vorbestimmten Maß expandieren und/oder (aus-)gedehnt werden kann, wobei im Gegenzug die an der Kabelführung oder an dem Wellenschlauch befestigte Feder durch die Zugkraft gespannt wird. Lässt die auf die Kabelführung oder den Wellenschlauch ausgeübte Zugkraft nach, lässt auch die auf die Feder wirkende Zugkraft nach. Die Feder staucht oder drückt die Kabelführung oder den Wellenschlauch in diesem Fall erneut bis zu einem vorbestimmten Maß zusammen.

Weiter kann die Feder im Vorrichtungsinnenraum optional mit einer Vorspannung oder Materialspannung, insbesondere vorkomprimiert, angeordnet werden, sodass die Feder zum Beispiel bereits ohne eine auf eine durch die Vorrichtung aufgenommene Kabelführung, insbesondere ohne eine auf einen durch die Vorrichtung aufgenommenen Wellenschlauch, ausgeübte Zugkraft eine Kraft, insbesondere einen Gegendruck, auf die aufgenommene Kabelführung oder auf den aufgenommenen Wellenschlauch ausübt.

Ein Vorteil des im Vorrichtungsinnenraum angeordneten Längenausgleichselements mit der Feder ist, dass eine Kabelführung, zum Beispiel ein Wellenschlauch, im Falle einer Roboterbewegung zwar temporär zur Kompensation der Roboterbewegung bewegt, insbesondere auch teilweise aus der Vorrichtung zur Aufnahme von Kabelführungen oder Wellenschläuchen herausbewegt, werden kann, jedoch nach einem Abschluss der Roboterbewegung und/oder nach einer Rückkehr des Roboters in die Ausgangsposition durch die Feder wieder in die ursprüngliche Anordnungsposition zurückbewegt wird. Die Kabelaufnahme oder der Wellenschlauch wird somit mit einem bestimmten Spiel, insbesondere mit einem bestimmten Spiel in der Aufnahmerichtung oder Schlauchrichtung aufgenommen, wobei ein ungewolltes dauerhaftes Herausbewegen der Kabelführung oder des Wellenschlauchs aus der Vorrichtung und/oder ein (Über-)Dehnen der Kabelführung oder des Wellenschlauchs verhindert werden.

In weiteren Ausführungsformen kann die Vorrichtung auch mehrere, insbesondere zwei Federn aufweisen, wobei jede dieser mehreren Federn an einem der Mantelelemente und/oder an einer Führungsgeometrie eines Mantelelements fixiert oder, insbesondere unelastisch, angeordnet sein kann und/oder jeweils eine Kabelführungs- oder Wellenschlauchaufnahme aufweisen kann.

Alternativ oder ergänzend kann das Längenausgleichselement anstatt der Feder oder den Federn auch ein anderes elastisches Element, zum Beispiel ein Gummi, oder auch ein elektromagnetisches System und/oder ein Motorsystem aufweisen, welches jeweils wie die vorangehend beschriebene/n Feder/n an einem der Mantelelemente und/oder an einer Führungsgeometrie eines Mantelelements und an einer Kabelführung, insbesondere an einem Wellenschlauch, befestigt und/oder befestigbar ist. Das elastische Element, das elektromagnetische System und/oder das Motorsystem können hierbei die Funktionen der vorangehend beschriebenen Feder/n übernehmen und/oder ersetzen. Ferner können das elastische Element, das elektromagnetische System und/oder das Motorsystem zu den vorangehend beschriebenen Federn korrespondierende Merkmale aufweisen, insbesondere eine Kabelführungs- oder Wellenschlauchaufnahme, welche in Funktion und/oder Ausformung den vorangehend beschriebenen Elementen des Längenausgleichselements entsprechen.

Das zumindest eine Sensorelement kann zum Beispiel ein optisch erfassendes Sensorelement sein kann. Alternativ kann das Sensorelement auch ein nicht-optisch erfassendes Sensorelement sein, zum Beispiel ein Zugkraftsensor oder ein Federsensor oder ein kapazitiver Sensor. In einer Variante kann das Sensorelement auch ein magnetisch erfassendes Sensorelement sein, zum Beispiel ein Hall-Sensor.

Ein Vorteil der Vorrichtung mit dem im Vorrichtungsinnenraum angeordneten Sensorelement ist, dass eine Belastung und/oder Bewegung der Kabelführung oder der Wellenschläuche ohne eine manuelle Kontrolle mit externen Sensoren, gemessen oder erfasst werden kann. Die Mess- oder Erfassungsergebnisse des Sensorelements können zum Beispiel mit einer Funkverbindung an eine Auswertevorrichtung, zum Beispiel an eine Rechnereinheit, übertragen werden. Die Auswertevorrichtung kann die Messergebnisse auswerten und/oder aufbereiten, über einen längeren Zeitraum speichern und/oder vergleichen und/oder an einen Bediener der Auswertevorrichtung ausgeben. Dieses erleichtert das Erkennen von nicht optimal angeordneten Aufnahmevorrichtungen oder einer zumindest nicht optimal ausgeführten Schlauchführung.

Optional kann die Vorrichtung daher eine, insbesondere in einen Roboter integrierbare, Auswertevorrichtung aufweisen, die dazu ausgebildet ist, die von dem ersten Sensorelement erfasste Federausdehnung der Feder des Längenausgleichselements und/oder eine von dem Sensorelement ermittelte Federkraft auszuwerten. Abhängig von diesem Auswerten kann die Auswertevorrichtung die Ausgabe einer Zustandswarnmeldung zu veranlassen.

In einer Variante kann die Vorrichtung hierzu, insbesondere ein in einen Roboter oder in ein Mantelelement integrierbares, Anzeigeelement umfassen, das zur optisch wahrnehmbaren Ausgabe der Zustandswarnmeldung ausgebildet ist.

In einer Variante kann das Aufnahmeelement mehrere, insbesondere zwei oder drei, Mantelelemente aufweisen, die dazu eingerichtet sind, gemeinsam den Vorrichtungsinnenraum mit den zumindest zwei Vorrichtungsöffnungen zumindest teilweise zu umschließen oder zu umgeben. Jedes der mehreren Mantelelemente kann um eine Rotationsachse schwenkbar an zumindest einem weiteren Mantelelement angeordnet oder befestigt sein.

Mit anderen Worten können die Mantelelemente jeweils schwenkbar und/oder rotierbar aneinander angeordnet werden. Die Mantelelemente können insbesondere formbündig aneinander angeordnet werden. Ein Vorteil dieser Vorrichtung ist, dass durch ein Schwenken oder Aufklappen eines oder mehrerer Mantelelemente der Innenraum des Aufnahmeelements zur Anordnung von Kabelführungen oder Wellenschläuchen freigegeben werden kann und durch ein anschließendes Zuklappen der Innenraum wieder, bis auf die zumindest zwei Vorrichtungsöffnungen, verschlossen werden kann. Hierdurch werden die Vorteile einer rohrförmigen Aufnahmevorrichtung, nämlich besserer Schutz der aufgenommenen Kabelführungen oder Wellenschläuche gegenüber Beschädigungen und eine bessere Fixierung oder Anordnung der Kabelführungen oder Wellenschläuche in allen Raumrichtungen, mit den Vorteilen einer nicht-rohrförmigen Vorrichtung zur Aufnahme von Kabelführungen und Wellenschläuchen, nämlich die Möglichkeit die Kabelführungen oder Wellenschläuche in der Aufnahmevorrichtung anzuordnen ohne diese vom Schlauchende her durch die Aufnahmevorrichtung hindurchzuführen, vereint.

In einer Variante weist die Vorrichtung ein Aufnahmeelement mit zumindest drei Mantelelementen auf, wobei jedes der drei Mantelelemente um eine Rotationsachse schwenkbar/klappbar oder rotierbar an einem der weiteren Mantelelemente angeordnet ist. Ein Vorteil hierbei ist, dass der Innenraum des Aufnahmeelements weiter geöffnet werden kann, als dieses zum Beispiel mit zwei zueinander schwenkbaren Mantelelementen möglich ist. Im Fall der Verwendung von zwei Mantelelementen kann ein im Wesentlichen zylinderförmiger Innenraum nur soweit zugänglich gemacht werden, dass zumindest eines der Mantelelemente zumindest einen Halbzylinder auf der Grundfläche eines Halbkreises umformt. Dieses erzwingt, dass eine Kabelführung oder ein Wellenschlauch im Wesentlichen orthogonal zur durch die Schwenkung der Mantelelemente entstehenden Anordnungsöffnung in den Innenraum des Aufnahmeelements hinein angeordnet werden muss, welches die Anordnungsoptionen und/oder die Anordnungsflexibilität der Vorrichtung einschränkt. Bei der Verwendung von drei oder mehr zueinander schwenkbaren Mantelelementen kann der Innenraum des Aufnahmeelements jedoch mit einem nahezu beliebigen Öffnungswinkel, zum Beispiel mit einem Öffnungswinkel von 270° freigegeben werden, welches die Anordnung einer Kabelführung oder eines Wellenschlauchs aus einer zumindest nahezu beliebigen Richtung erlaubt. Dieses ist bei der Anordnung von Kabelführungen oder Wellenschläuchen an Robotern oder an anderen Maschinen ein Vorteil, da die Aufnahmevorrichtungen oder Dresspacks für zum Beispiel einen Monteur in der betrieblichen Praxis nicht aus jeder Raumrichtung frei zugänglich sind.

Optional kann zumindest ein Rotationselement, zum Beispiel ein Metallstift oder ein Kunststoffstift, um das zumindest zwei der Mantelelemente um eine Rotationsachse schwenkbar gelagert sind, durch die zwei Mantelelemente, die um das Rotationselement schwenkbargelagert sind, zumindest teilweise, beispielsweise vollständig, umschlossen sein. Mit anderen Worten können zumindest zwei Mantelelemente schwenkbar oder rotierbar durch ein, insbesondere zylinderförmiges, Rotationselement gelagert sein, wobei eines der Mantelelemente oder beide Mantelelemente im Zusammenwirken ein Gehäuse für das Rotationselement ausbilden, welches das Rotationselement zumindest teilweise, beispielsweise vollständig, umgibt.

Ein Vorteil hierbei ist, dass das Rotationselement vor in die Lagerung eindringendem Schmutz und vor in die Lagerung eindringenden Flüssigkeiten geschützt werden kann und eine Schmierung des Rotationselements in dem durch die Mantelelemente gebildeten Gehäuse verbleiben kann. Ferner wird die Handhabung der Vorrichtung dadurch erleichtert, dass ein Bediener der Vorrichtung nicht unbeabsichtigt in Kontakt mit einer Schmierung des Rotationselements oder Lagers gelangen kann. Darüber hinaus Schützt das durch die Mantelelemente gebildete Gehäuse das Rotationselement vor Beschädigungen.

Weiter kann die Vorrichtung zumindest eine Verschlussvorrichtung aufweisen, die an einem oder an mehreren Mantelelementen angeordnet und dazu ausgebildet ist, zumindest zwei der mehreren Mantelelemente lösbar aneinander zu befestigen. Die Verschlussvorrichtung kann insbesondere zumindest ein in einer zu der/den Rotationsachse/n parallelen Richtung verschiebliches und/oder bewegliches Verriegelungselement aufweisen, welches zur Herstellung und/oder Freigabe der lösbaren Befestigung eingerichtet ist.

Die Verschlussvorrichtung kann zum Beispiel eine oder mehrere Verschlussschienen aufweisen, die jeweils an einem der schwenkbaren Mantelelemente angeordnet sind. Die Verschlussschienen können dazu ausgebildet sein, mit einer Ausformung und/oder einer weiteren Verschlussschiene an einem jeweils weiteren Mantelelement in einen, optional zumindest teilweise materialschlüssigen, Eingriff gebracht oder angeordnet zu werden. Das Verriegelungselement kann insbesondere dazu ausgebildet sein, eine optional zumindest teilweise materialschlüssige und/oder formschlüssige Anlage der Verschlussschiene/n aneinander und/oder an dem weiteren Mantelelement zu fixieren oder zur Lösung freizugeben.

Die zumindest eine Verschlussschiene kann zumindest abschnittsweise einen zumindest teilweise T-förmigen Querschnitt aufweisen. Optional kann die Verschlussschiene dazu eingerichtet sein, zumindest abschnittsweise mit einem Teil eines weiteren Mantelelements, insbesondere formschlüssig, in Anlage gebracht zu werden, und/oder gemeinsam mit dem Teil des weiteren Mantelelements zumindest abschnittsweise einen zumindest teilweise T-förmigen Querschnitt auszubilden. Das Verriegelungselement kann dazu eingerichtet sein, zumindest abschnittsweise mit der Verschlussschiene, insbesondere materialschlüssig und/oder formschlüssig, in Anlage gebracht zu werden, zum Beispiel durch einen Bediener der Vorrichtung.

Die Verschlussschiene und/oder eines der Mantelelemente können eine oder mehrere Rastnasen aufweisen, die dazu eingerichtet sind, das verschiebliche Verriegelungselement in einer vorbestimmten Position lösbar zu fixieren und/oder einer Verschiebung oder Bewegung des Verriegelungselements in einer zu der/den Rotationsachsein parallelen Richtung einen Druckwiderstand entgegenzusetzen.

In einer Variante können die Rastnasen dazu eingerichtet sein, das verschiebliche Verriegelungselement in drei voneinander verschiedenen vorbestimmten Positionen lösbar zu fixieren und/oder einer Verschiebung oder Bewegung des Verriegelungselements in einer zu der/den Rotationsachse/n parallelen Richtung einen Druckwiderstand entgegenzusetzen, zum Beispiel wenn das Verriegelungselement aus einer der drei vorbestimmten Positionen herausbewegt wird.

Das Verriegelungselement kann optional, insbesondere in einer im Wesentlichen zu der/den Rotationsachse/n orthogonalen Richtung verlaufende, Handhabungsrillen aufweisen. Die Handhabungsrillen können einem Bediener der Vorrichtung die Betätigung des Verriegelungselements erleichtern.

Weiter kann das Verriegelungselement in einer Variante dazu eingerichtet sein, formschlüssig mit einem Zentralelement in Anlage gebracht zu werden, insbesondere wenn die Verschlussvorrichtung zumindest zwei der mehreren Mantelelemente lösbar aneinander befestigt. Mit anderen Worten kann das Verriegelungselement von einem Bediener der Vorrichtung in eine Position bewegt werden, in der es einerseits an einem Zentralelement der Verschlussvorrichtung anliegt und andererseits zwei der mehreren Mantelelemente lösbar aneinander befestigt.

Ein Vorteil der Verschlussvorrichtung ist, dass sie das Öffnen oder Freigeben sowie das Verschließen, Umformen oder Zuklappen des Innenraums des Aufnahmeelements ohne zusätzliches Werkzeug, d.h. werkzeugfrei, erlaubt. Dieses vereinfacht und beschleunigt die Anordnung einer Kabelführung oder eines Wellenschlauchs in der Vorrichtung.

Optional können eines oder mehrere der Mantelelemente, insbesondere an einer Vorrichtungsöffnung, eine in den Innenraum hinein ausgeformte Führungsgeometrie aufweisen. Die Führungsgeometrie kann dazu eingerichtet sein, eine Positionierung einer Kabelführung oder eines Wellenschlauchs vorzugeben und/oder zu beeinflussen. Hierdurch kann insbesondere eine bestimmte vorgesehene Anordnung der Kabelführung oder des Wellenschlauchs im Innenraum der Vorrichtung sichergestellt und/oder verbessert werden.

In einer Ausführungsform können eines, mehrere und/oder alle Mantelelemente, insbesondere an einer Außenseite der Mantelelemente, eine insbesondere eingeprägte Vertiefung, eine Führung, eine Sicke oder eine Nut aufweisen. Die Mantelelemente, insbesondere die Außenseite der Mantelelemente können ein Fertigungsmaterial mit Kunststoff, insbesondere mit Polymermaterial, Metall, Kohlenfasern, Kohlefaserverbundstoff, Keramik und/oder Glasmaterial aufweisen.

Ein Vorteil der insbesondere eingeprägten Führungen, Vertiefungen, Sicken oder Nuten ist, dass diese die Mantelelemente versteifen können und/oder eine Griffigkeit der Mantelelemente verbessern können.

Ferner können die Mantelelemente insbesondere dazu eingerichtet sein, mit einer der Außenseite gegenüberliegenden Innenseite an einer durch das Aufnahmeelement aufgenommenen Kabelführung, insbesondere an einem durch das Aufnahmeelement aufgenommenen Wellenschlauch, und/oder an dem Längenausgleichselement anzuliegen. Hierdurch kann eine Führung für die aufgenommene Kabelführung oder den aufgenommenen Wellenschlauch und/oder das Längenausgleichselement hergestellt sein, welche insbesondere eine korrekte Anordnung der Kabelführung oder des Wellenschlauchs im Vorrichtungsinnenraum erleichtert und/oder verbessert und eine Bewegungsbahn für die Feder des Längenausgleichselements, insbesondere in Form von Führungsschienen, definiert oder herstellt. Die Bewegung der Feder mit der Kabelführungs- oder Wellenschlauchaufnahme kann hierdurch ohne wesentliches radiales Spiel erfolgen, welches einerseits zur Materialschonung der Feder beiträgt und ein Stauchen oder Auseinanderziehen der Feder erleichtert. Die Mantelelemente können insbesondere mit jenen Bereichen der Innenseite an eine durch das Aufnahmeelement aufgenommenen Kabelführung, insbesondere an einem aufgenommenen Wellenschlauch, und/oder an dem Längenausgleichselement anliegen und/oder in Anlage gebracht werden, die einer insbesondere eingeprägten Vertiefung, Führung, Sicke oder Nut in der Außenseite der Mantelelemente gegenüberliegen.

In einer Ausführungsform kann die Vorrichtung ein zweites im Vorrichtungsinnenraum angeordnetes Sensorelement aufweisen, das dazu eingerichtet ist, eine Federausdehnung oder Federauslenkung der Feder des Längenausgleichselements zu erfassen.

Weiter kann die Vorrichtung ein an der Feder des Längenausgleichselements, insbesondere ein an der Feder und/oder an Kabelführungs- oder Wellenschlauchaufnahme, angeordnetes Messelement, welches insbesondere ein Reflexionselement sein kann, aufweisen. Alternativ oder ergänzend kann das Messelement auch einen Magneten, zum Beispiel einen Permanentmagneten, aufweisen. Das Messelement kann zum Beispiel in einem Raum zwischen dem ersten und dem zweiten Sensorelement angeordnet sein.

Das Messelement kann insbesondere ein Reflexionselement sein, welches zum Beispiel zur Reflexion von Laserlicht und/oder Infrarotlicht eingerichtet ist. Das Messelement kann ein Reflexionselement sein, welches eine im Wesentlichen orthogonal zu einer Rotationsachse der Mantelelemente ausgerichtete Reflexionsfläche aufweist. Das Reflexionselement kann insbesondere so ausgerichtet sein, dass ein Strahl aus Laserlicht oder infrarotem Laserlicht im Wesentlichen orthogonal auf die Reflexionsfläche auftrifft.

Der von den Mantelelementen umschlossene Vorrichtungsinnenraum kann einen zumindest im Wesentlichen zylinderförmigen Abschnitt aufweisen, der zur Aufnahme des Längenausgleichselements und/oder zumindest eines Teils einer Kabelführung oder zumindest eines Teils eines Wellenschlauchs ausgebildet ist. Der Vorrichtungsinnenraum kann zum Beispiel einen zumindest im Wesentlichen zylinderförmigen Abschnitt aufweisen, der zur Aufnahme von Wellenschläuchen mit einem Durchmesser von beispielsweise ca. 70 mm, 56 mm oder 48 mm eingerichtet ist. Die zumindest zwei Vorrichtungsöffnungen, die auch nach einem Schwenken, Rotieren, Zuklappen oder Verschließen der Mantelelemente stets erhalten bleiben können und insbesondere zur Durchführung einer durch die Vorrichtung aufzunehmenden Kabelführung, insbesondere eines Wellenschlauchs, geeignet sind, können insbesondere Öffnungen eines zumindest im Wesentlichen zylinderförmigen Abschnitts des Vorrichtungsinnenraum sein.

Der von dem oder den Mantelelementen umschlossene Vorrichtungsinnenraum kann zudem weiter einen zumindest im Wesentlichen quaderförmigen Abschnitt aufweisen, der insbesondere zur Aufnahme des Messelements und/oder des ersten Sensorelements und/oder des zweiten Sensorelements eingerichtet ist. Der zumindest eine im Wesentlichen quaderförmige Abschnitt des Vorrichtungsinnenraums kann zumindest teilweise von einem und/oder zumindest teilweise von mehreren Mantelelementen umschlossen sein. Ein Vorteil des zumindest einen im Wesentlichen quaderförmigen Abschnitts des Vorrichtungsinnenraums ist, dass dieser Abschnitt des Vorrichtungsinnenraums insbesondere zur Anordnung zusätzlicher Vorrichtungselemente, insbesondere von Sensor- und/oder Messelementen, gut geeignet ist und dass die so im Vorrichtungsinnenraum angeordneten Vorrichtungselemente ebenfalls durch die Mantelelemente vor Verunreinigung und Beschädigung geschützt werden.

Das erste und/oder das zweite Sensorelement können insbesondere ein optisch oder magnetisch erfassendes Sensorelement sein. Zum Beispiel können das erste und/oder das zweite Sensorelement dazu eingerichtet sein, Laserlicht und/oder Infrarotlicht, insbesondere Infrarotlaserlicht, zu emittieren und eine Federausdehnung der Feder des Längenausgleichselements mit einer Laufzeitmessung und/oder durch eine Triangulation des durch das Messelement reflektierten Laserlichts zu ermitteln. Mit anderen Worten können das erste oder/und das zweite Sensorelement Abstandsmesssensoren sein, die jeweils, insbesondere mit einem Strahl aus Laserlicht, einen Abstand zwischen dem ersten oder/und dem zweiten Sensorelement und dem an der Feder des Längenausgleichselements angeordneten/fixierten Messelement ermitteln. Die so ermittelten Entfernungen zwischen dem/den Sensorelement/e und dem Messelement korrespondieren zu einer Federausdehnung oder Federauslenkung der Feder des Längenausgleichselements, an dem das Messelement befestigt ist. Somit können durch das/die Sensorelement/e und/oder durch eine Auswertevorrichtung, welche zum Beispiel über eine Funkverbindung mit dem/den Sensorelement/en kommuniziert, Rückschlüsse über eine aktuelle oder aufgezeichnete Federausdehnung oder Federauslenkung ermittelt werden.

Alternativ oder ergänzend können das erste und/oder das zweite Sensorelement auch ein magnetisch erfassendes Sensorelement sein, welches insbesondere einen Hall-Sensor aufweist. Das erste und/oder das zweite Sensorelement können zum Beispiel dazu eingerichtet sein, eine Federausdehnung der Feder des Längenausgleichselements basierend auf der Erfassung eines Magnetfelds zu ermitteln.

Weiter können das erste und/oder das zweite Sensorelement dazu eingerichtet sein, eine durch die Feder auf das Mantelelement und/oder auf die Kabelführungs- oder Wellenschlauchaufnahme ausgeübte Federkraft zu ermitteln.

Das/die Sensorelement/e und/oder die Auswertevorrichtung können ferner dazu eingerichtet sein, eine über eine Einsatzdauer auftretende Federermüdung, eine Federverkantung im Vorrichtungsinnenraum, eine Kabelführungs- oder Wellenschlauchauslenkung und/oder eine Kabelführungs- oder Wellenschlauchposition oder eine Kabelführungs- oder Wellenschlauchabschnittsposition zu erfassen oder anhand von erfassten und/oder aufgezeichneten Messdaten, zum Beispiel durch einen Vergleich mit (vor-)gespeicherten Soll-Daten, zu ermitteln. Das/die Sensorelement/e und/oder die Auswertevorrichtung können zudem dazu eingerichtet sein, im Falle einer Abweichung der ermittelten oder erfassten Parameter von einem vorbestimmten oder gespeicherten Sollwertkorridor einen Alarm und/oder einen Wartungshinweis an einen Bediener oder an eine mit der Wartung der Vorrichtung beauftragte Person auszugeben.

In Ausführungsformen der Vorrichtung, die zumindest zwei Sensorelemente umfassen, kann das erste Sensorelement an einem ersten Ende des Vorrichtungsinnenraums, insbesondere an einem ersten Ende eines zumindest im wesentlichen quaderförmigen Vorrichtungsinnenraumabschnitts angeordnet sein. Das zweite Sensorelement kann an einem dem ersten Ende gegenüberliegenden zweiten Ende des Vorrichtungsinnenraums, insbesondere an einem zweiten Ende eines zumindest im wesentlichen quaderförmigen Vorrichtungsinnenraumabschnitts, angeordnet sein. Das erste und das zweite Sensorelement können zum Beispiel an einander gegenüberliegenden Seitenflächen oder (Innen-)Wandungen des Vorrichtungsinnenraums oder eines Vorrichtungsinnenraumabschnitts angeordnet sein. Das erste und das zweite Sensorelement können dazu eingerichtet sein, jeweils einen Strahl aus Laserlicht und/oder Infrarotlicht auf jeweils eine Oberfläche des Messelements, welches insbesondere ein Reflexionselement sein kann, zu richten, wobei die durch die Sensorelemente mit einem Laserstahl und/oder mit Infrarotlicht bestrahlten Oberflächen des Messelements jeweils einander gegenüberliegende Oberflächen des Messelements sind. Die Sensorelemente und/oder die Auswertevorrichtung können ferner dazu eingerichtet sein, die von dem ersten und die von dem zweiten Sensorelement ermittelten Messergebnisse/Parameter, insbesondere eine von dem ersten und/oder dem zweiten Sensorelement ermittelte Federausdehnung oder Federauslenkung miteinander zu vergleichen und/oder zu mitteln, um so eine Genauigkeit der Messergebnisse und/oder gemessenen Parameter zu verbessern.

In einer Ausführungsform kann das Befestigungselement der Vorrichtung dazu eingerichtet sein, mit einer Schraubverbindung an der Befestigungsvorrichtung angeordnet zu werden oder angeordnet zu sein. Mit anderen Worten kann das Befestigungselement an der Befestigungsvorrichtung anordenbar sein. Alternativ oder ergänzend kann das Befestigungselement eine Zahnung aufweisen und dazu eingerichtet sein, mit der Zahnung formschlüssig in eine korrespondierende (Gegen-)Zahnung der Befestigungsvorrichtung einzugreifen. Die Zahnung des Befestigungselements und/oder die Zahnung der Befestigungsvorrichtung können dazu eingerichtet sein, jeweils mehrere mögliche Anordnungspositionen des Befestigungselements an der Befestigungsvorrichtung zuzulassen. Mit anderen Worten kann die Zahnung des Befestigungselements und/oder die Zahnung der Befestigungsvorrichtung dazu eingerichtet sein, eine Anordnungsposition des Befestigungselements an der Befestigungsvorrichtung nicht festzulegen. Die Anordnungsposition des Befestigungselements an der Befestigungsvorrichtung kann variabel sein.

Optional kann das Befestigungselement dazu eingerichtet sein, mit einem oder mehreren Befestigungsbolzen und/oder mit einem oder mehreren Befestigungsclips lösbar an der Befestigungsvorrichtung befestigt zu werden. Der oder die Befestigungsbolzen und/oder der oder die Befestigungsclip/s können jeweils sowohl in vorbereitete Öffnungen in dem Befestigungselement als auch in vorbereitete Öffnungen in der Befestigungsvorrichtung eingreifen. Weiter können die Befestigungsbolzen und/oder die Befestigungsclips insbesondere jeweils in einer zu der/den Rotationsachse/n parallelen Richtung oder in einer zu der/den Rotationsachse/n orthogonalen Richtung in die vorbereiteten Öffnungen in dem Befestigungselement und in die vorbereiteten Öffnungen in der Befestigungsvorrichtung einführbar sein. Ein Vorteil hierbei ist, dass das Befestigungselement ohne zusätzliches und/oder spezielles Werkzeug mit der Befestigungsvorrichtung verbunden werden und/oder auch wieder von dieser gelöst werden kann. Die Montage der Vorrichtung zur Aufnahme von Kabelführungen oder Wellenschläuchen kann hierdurch vereinfacht und beschleunigt werden.

Die Zahnung des Befestigungselements kann an einer Oberfläche des Befestigungselements angeordnet sein. Alternativ oder ergänzend kann die Zahnung des Befestigungselements auch an einem Verriegelungsfortsatz des Befestigungselements angeordnet sein.

Der Verriegelungsfortsatz kann um eine Befestigungselementachse schwenkbar an einem weiteren Bestandteil des Befestigungselements, zum Beispiel an einem Befestigungselementgrundkörper, angeordnet sein. Die Befestigungselementachse kann insbesondere parallel zu der/den Rotationsachse/n der Mantelelemente angeordnet sein.

Die an dem Verriegelungsfortsatz angeordnete Zahnung kann dazu eingerichtet sein, durch eine Schwenkung des Verriegelungsfortsatzes um die Befestigungselementachse zumindest teilweise formschlüssig mit der Zahnung der Befestigungsvorrichtung in Eingriff gebracht zu werden. Weiter kann die an dem Verriegelungsfortsatz angeordnete Zahnung dazu eingerichtet sein, durch eine Schwenkung des Verriegelungsfortsatzes um die Befestigungselementachse zumindest teilweise von der Zahnung der Befestigungsvorrichtung gelöst zu werden.

Ein Vorteil des schwenkbaren Verriegelungselements mit einer Zahnung ist, dass eine Oberfläche des Befestigungselements auch ohne Zahnung ausgebildet werden kann, was ein Gleiten oder Verschieben des Befestigungselements über die Zahnung einer Befestigungsvorrichtung erlaubt. Das Befestigungselement kann somit zuerst in einer Richtung parallel zur Befestigungselementachse über die Zahnung einer Befestigungsvorrichtung verschoben oder bewegt werden und, nachdem eine gewünschte Position in einer Richtung parallel zur Befestigungselementachse erreicht wurde, mittels des schwenkbaren Verriegelungselements an der Befestigungsvorrichtung fixiert werden. Das Fixieren des Befestigungselements an der Befestigungsvorrichtung kann dadurch erreicht werden, dass eine an dem Verriegelungsfortsatz angeordnete Zahnung durch eine Schwenkung des Verriegelungsfortsatzes um die Befestigungselementachse zumindest teilweise formschlüssig mit der Zahnung der Befestigungsvorrichtung in Eingriff gebracht wird.

Optional kann der Verriegelungsfortsatz zumindest ein, insbesondere elastisch deformierbares, Verriegelungsfortsatzeinrastelement aufweisen, das dazu eingerichtet ist, den Verriegelungsfortsatz an dem Aufnahmeelement und/oder an einem der Mantelelemente des Aufnahmeelements und/oder an der Befestigungsvorrichtung zu fixieren, wenn die an dem Verriegelungsfortsatz angeordnete Zahnung mit der Zahnung der Befestigungsvorrichtung in Eingriff gebracht wird.

Ein Vorteil des, insbesondere elastisch deformierbaren, Verriegelungsfortsatzeinrastelements ist, dass hierdurch ein unberücksichtigtes Ablösen des Verriegelungsfortsatzes von dem Aufnahmeelement und/oder von der Befestigungsvorrichtung verhindert werden kann. Optional kann der Verriegelungsfortsatz mit dem Verriegelungsfortsatzeinrastelement dazu eingerichtet sein, gegen einen Druckwiderstand wieder von dem Aufnahmeelement und/oder von einem der Mantelelemente des Aufnahmeelements und/oder von der Befestigungsvorrichtung abgelöst zu werden, sodass die durch das Verriegelungsfortsatzeinrastelement bewirkte Fixierung aufgehoben wird.

Optional kann eine Vorrichtung zur Aufnahme von Kabelführungen oder Wellenschläuchen eines oder mehrere Dichtungselemente aufweisen, die jeweils an und/oder in einer der Vorrichtungsöffnungen angeordnet und/oder dazu eingerichtet sind, an einer zumindest teilweise aufgenommenen Kabelführung, zum Beispiel an einem Wellenschlauch mit einem Durchmesser von beispielsweise ca. 70 mm, 56 mm oder 48 mm, anzuliegen. Die Dichtungselemente können jeweils dazu eingerichtet sein, eine der Vorrichtungsöffnungen im Zusammenwirken mit der aufgenommenen Kabelführung oder mit dem aufgenommenen Wellenschlauch zumindest im Wesentlichen staub- und/oder flüssigkeitsdicht zu verschließen. Hierdurch kann einer Verschmutzung des Vorrichtungsinnenraums entgegengewirkt werden.

Eine weitere Vorrichtung zur Aufnahme von Kabelführungen oder Wellenschläuchen weist ein Aufnahmeelement mit zumindest einem Mantelelement auf, das einen Vorrichtungsinnenraum mit zumindest zwei Vorrichtungsöffnungen zumindest teilweise umschließt. Zumindest ein Befestigungselement ist an dem Aufnahmeelement angeordnet und dazu ausgebildet, lösbar an einer Befestigungsvorrichtung angeordnet oder befestigt zu werden. Das Befestigungselement weist hierbei ein Formelement, insbesondere eine Zahnung, auf. Das Befestigungselement ist zudem dazu ausgebildet und angeordnet, mit dem Formelement, insbesondere mit der Zahnung, zumindest teilweise formschlüssig in die Befestigungsvorrichtung, insbesondere in eine, insbesondere korrespondierende, (Gegen-) Zahnung der Befestigungsvorrichtung einzugreifen und/oder mit der Zahnung zumindest teilweise in die, insbesondere korrespondierende, (Gegen-) Zahnung der Befestigungsvorrichtung hinein angeordnet zu werden.

In einer Variante kann das Aufnahmeelement mehrere, insbesondere zwei oder drei, Mantelelemente aufweisen, die dazu eingerichtet sind, gemeinsam den Vorrichtungsinnenraum mit den zumindest zwei Vorrichtungsöffnungen zumindest teilweise zu umschließen oder zu umgeben. Jedes der mehreren Mantelelemente kann um eine Rotationsachse schwenkbar an zumindest einem weiteren Mantelelement angeordnet oder befestigt sein.

Mit anderen Worten können die Mantelelemente jeweils schwenkbar und/oder rotierbar aneinander angeordnet werden. Die Mantelelemente können insbesondere formschlüssig und/oder bündig miteinander abschließend aneinander angeordnet werden. Ein Vorteil dieser Vorrichtung ist, dass durch ein Schwenken oder Aufklappen eines oder mehrerer Mantelelemente der Innenraum des Aufnahmeelements zur Anordnung von Kabelführungen oder Wellenschläuchen freigegeben werden kann und durch ein anschließendes Zuklappen der Innenraum wieder, bis auf die zumindest zwei Vorrichtungsöffnungen, verschlossen werden kann. Hierdurch werden die Vorteile einer rohrförmigen Aufnahmevorrichtung, nämlich besserer Schutz der aufgenommenen Kabelführungen oder Wellenschläuche gegenüber Beschädigungen und eine bessere Fixierung oder Anordnung der Kabelführungen oder Wellenschläuche in allen Raumrichtungen, mit den Vorteilen einer nicht-rohrförmigen Aufnahmevorrichtungen für Kabelführungen oder Wellenschläuche, nämlich die Möglichkeit die Kabelführungen oder Wellenschläuche in der Aufnahmevorrichtung anzuordnen ohne diese vom Schlauchende her durch die Aufnahmevorrichtung hindurchzuführen, vereint.

In einer Variante weist die Vorrichtung ein Aufnahmeelement mit zumindest drei Mantelelementen auf, wobei jedes der drei Mantelelemente um eine Rotationsachse schwenkbar/klappbar oder rotierbar an einem der weiteren Mantelelemente angeordnet ist. Ein Vorteil hierbei ist, dass der Innenraum des Aufnahmeelements weiter geöffnet werden kann, als dieses zum Beispiel mit zwei zueinander schwenkbaren Mantelelementen möglich ist. Im Fall der Verwendung von zwei Mantelelementen kann ein im Wesentlichen zylinderförmiger Innenraum nur soweit zugänglich gemacht werden, dass zumindest eines der Mantelelemente zumindest einen Halbzylinder auf der Grundfläche eines Halbkreises umformt. Dieses erzwingt, dass eine Kabelführung oder ein Wellenschlauch im Wesentlichen orthogonal zur durch die Schwenkung der Mantelelemente entstehenden Anordnungsöffnung in den Innenraum des Aufnahmeelements hinein angeordnet werden muss, welches die Anordnungsoptionen und/oder die Anordnungsflexibilität der Vorrichtung einschränkt. Bei der Verwendung von drei oder mehr zueinander schwenkbaren Mantelelementen kann der Innenraum des Aufnahmeelements jedoch mit einem nahezu beliebigen Öffnungswinkel, zum Beispiel mit einem Öffnungswinkel von 270° freigegeben werden, welches die Anordnung einer Kabelführung oder eines Wellenschlauchs aus einer zumindest nahezu beliebigen Richtung erlaubt. Dieses ist bei der Anordnung von Kabelführungen oder Wellenschläuchen an Robotern oder an anderen Maschinen ein Vorteil, da die Aufnahmevorrichtungen oder Dresspacks für zum Beispiel einen Monteur in der betrieblichen Praxis nicht aus jeder Raumrichtung frei zugänglich sind.

Weiter kann die Vorrichtung zumindest eine Verschlussvorrichtung aufweisen, die an einem oder an mehreren Mantelelementen angeordnet und dazu ausgebildet ist, zumindest zwei der mehreren Mantelelemente lösbar aneinander zu befestigen. Die Verschlussvorrichtung kann insbesondere zumindest ein in einer zu der/den Rotationsachse/n parallelen Richtung verschiebliches und/oder bewegliches Verriegelungselement aufweisen, welches zur Herstellung und/oder Freigabe der lösbaren Befestigung eingerichtet ist.

Die Verschlussvorrichtung kann zum Beispiel eine oder mehrere Verschlussschienen aufweisen, die jeweils an einem der schwenkbaren Mantelelemente angeordnet sind. Die Verschlussschienen können dazu ausgebildet sein, mit einer Ausformung und/oder einer weiteren Verschlussschiene an einem jeweils weiteren Mantelelement in einen, optional zumindest teilweise materialschlüssigen, Eingriff gebracht oder angeordnet zu werden. Das Verriegelungselement kann insbesondere dazu ausgebildet sein, eine optional zumindest teilweise materialschlüssige und/oder formschlüssig Anlage der Verschlussschiene/n aneinander und/oder an dem weiteren Mantelelement zu fixieren oder zur Lösung freizugeben.

Die zumindest eine Verschlussschiene kann zumindest abschnittsweise einen zumindest teilweise T-förmigen Querschnitt aufweisen. Optional kann die Verschlussschiene dazu eingerichtet sein, zumindest abschnittsweise mit einem Teil eines weiteren Mantelelements, insbesondere formschlüssig, in Anlage gebracht zu werden, und/oder gemeinsam mit dem Teil des weiteren Mantelelements zumindest abschnittsweise einen zumindest teilweise T-förmigen Querschnitt auszubilden. Das Verriegelungselement kann dazu eingerichtet sein, zumindest abschnittsweise mit der Verschlussschiene, insbesondere materialschlüssig und/oder formschlüssig, in Anlage gebracht zu werden, zum Beispiel durch einen Bediener der Vorrichtung.

Die Verschlussschiene und/oder eines der Mantelelemente können eine oder mehrere Rastnasen aufweisen, die dazu eingerichtet sind, das verschiebliche Verriegelungselement in einer vorbestimmten Position lösbar zu fixieren und/oder einer Verschiebung oder Bewegung des Verriegelungselements in einer zu der/den Rotationsachsein parallelen Richtung einen Druckwiderstand entgegenzusetzen.

In einer Variante können die Rastnasen dazu eingerichtet sein, das verschiebliche Verriegelungselement in drei voneinander verschiedenen vorbestimmten Positionen lösbar zu fixieren und/oder einer Verschiebung oder Bewegung des Verriegelungselements in einer zu der/den Rotationsachse/n parallelen Richtung einen Druckwiderstand entgegenzusetzen, zum Beispiel wenn das Verriegelungselement aus einer der drei vorbestimmten Positionen herausbewegt wird.

Das Verriegelungselement kann optional, insbesondere in einer im Wesentlichen zu der/den Rotationsachse/n orthogonalen Richtung verlaufende, Handhabungsrillen aufweisen. Die Handhabungsrillen können einem Bediener der Vorrichtung die Betätigung des Verriegelungselements erleichtern.

Weiter kann das Verriegelungselement in einer Variante dazu eingerichtet sein, formschlüssig mit einem Zentralelement in Anlage gebracht zu werden, insbesondere wenn die Verschlussvorrichtung zumindest zwei der mehreren Mantelelemente lösbar aneinander befestigt. Mit anderen Worten kann das Verriegelungselement von einem Bediener der Vorrichtung in eine Position bewegt werden, in der es einerseits an einem Zentralelement der Verschlussvorrichtung anliegt und andererseits zwei der mehreren Mantelelemente lösbar aneinander befestigt.

Ein Vorteil der Verschlussvorrichtung ist, dass sie das Öffnen oder Freigeben sowie das Verschließen, Umformen oder Zuklappen des Innenraums des Aufnahmeelements ohne zusätzliches Werkzeug, d.h. werkzeugfrei, erlaubt. Dieses vereinfacht und beschleunigt die Anordnung einer Kabelführung oder eines Wellenschlauchs in der Vorrichtung.

Optional können eines oder mehrere der Mantelelemente, insbesondere an einer Vorrichtungsöffnung, eine in den Innenraum hinein ausgeformte Führungsgeometrie aufweisen. Die Führungsgeometrie kann dazu eingerichtet sein, eine Positionierung einer Kabelführung oder eines Wellenschlauchs vorzugeben und/oder zu beeinflussen. Hierdurch kann insbesondere eine bestimmte vorgesehene Anordnung der Kabelführung oder des Wellenschlauchs im Innenraum der Vorrichtung sichergestellt und/oder verbessert werden.

In einer Variante kann die Vorrichtung zumindest ein im Vorrichtungsinnenraum angeordnetes Längenausgleichselement mit einer Feder aufweisen. Die Feder kann an einem der Mantelelemente und/oder an einer Führungsgeometrie fixiert oder, insbesondere unelastisch, angeordnet sein und eine Kabelführungs- oder Wellenschlauchaufnahme aufweisen, wobei die Kabelführungs- oder Wellenschlauchaufnahme dazu eingerichtet ist, an einer Kabelführung oder an einem Wellenschlauch fixiert oder, insbesondere unelastisch, angeordnet zu werden. Das Längenausgleichselement und/oder die Feder können dazu eingerichtet sein, einen im Vorrichtungsinnenraum der Vorrichtung aufgenommene Kabelführung, insbesondere einen Wellenschlauch, zu umformen oder zu umgeben. Mit anderen Worten kann eine Kabelführung, insbesondere ein Wellenschlauch, durch die Feder oder durch einen von der Feder umformten Federinnenraum hindurchgeführt werden.

Die Feder kann eine Metallfeder, insbesondere eine Stahlfeder sein. Die Feder kann insbesondere mit einem ersten Federende an einem der Mantelelemente und/oder an einer Führungsgeometrie fixiert oder, insbesondere unelastisch, angeordnet sein. Optional kann die Feder mit einem oder mehreren Federanordnungselementen an einem oder an mehreren Mantelelementen angeordnet sein. Die Kabelführungs- oder Wellenschlauchaufnahme kann insbesondere an einem zweiten Federende fixiert oder, insbesondere unelastisch, angeordnet sein. Optional kann die Kabelführungs- oder Wellenschlauchaufnahme einen Aufnahmering aufweisen, der zur material- und/oder kraftschlüssigen Aufnahme oder Fixierung einer Kabelführung oder eines Kabelführungsabschnitts, zum Beispiel eines Wellenschlauchs oder Wellenschlauchabschnitts, eingerichtet ist. Mit anderen Worten können die Kabelführung oder der Wellenschlauch im Wesentlichen unelastisch an der Feder befestigt werden.

Das Längenausgleichselement mit der Feder kann insbesondere dazu eingerichtet sein, einen an der Kabelführungs- oder Wellenschlauchaufnahme fixierte oder angeordnete Kabelführung, insbesondere einen Wellenschlauch, mit einer Materialspannung in einer zu der/den Rotationsachse/n parallelen Richtung aufzunehmen.

Optional kann die Feder die an ihr befestigte Kabelführung oder den an ihr befestigten Wellenschlauch zumindest abschnittsweise bis zu einem vorbestimmten Maß stauchen und/oder zusammendrücken, sodass der Schlauch im Falle einer auf ihn ausgeübten Zugkraft zumindest bis zu einem vorbestimmten Maß expandieren und/oder (aus-)gedehnt werden kann, wobei im Gegenzug die an der Kabelführung oder an dem Wellenschlauch befestigte Feder durch die Zugkraft gespannt wird. Lässt die auf die Kabelführung oder die auf den Wellenschlauch ausgeübte Zugkraft nach, lässt auch die auf die Feder wirkende Zugkraft nach. Die Feder staucht oder drückt die Kabelführung oder den Wellenschlauch in diesem Fall erneut bis zu einem vorbestimmten Maß zusammen.

Weiter kann die Feder im Vorrichtungsinnenraum optional mit einer Vorspannung oder Materialspannung, insbesondere vorkomprimiert, angeordnet werden, sodass die Feder zum Beispiel bereits ohne eine auf eine durch die Vorrichtung aufgenommene Kabelführung, insbesondere auf einen durch die Vorrichtung aufgenommenen Wellenschlauch, ausgeübte Zugkraft eine Kraft, insbesondere einen Gegendruck, auf den aufgenommenen Wellenschlauch ausübt.

Ein Vorteil des im Vorrichtungsinnenraum angeordneten Längenausgleichselements mit der Feder ist, dass eine Kabelführung oder ein Wellenschlauch im Falle einer Roboterbewegung zwar temporär zur Kompensation der Roboterbewegung bewegt, insbesondere auch teilweise aus der Vorrichtung zur Aufnahme von Kabelführungen oder Wellenschläuchen herausbewegt, werden kann, jedoch nach einem Abschluss der Roboterbewegung und/oder nach einer Rückkehr des Roboters in die Ausgangsposition durch die Feder wieder in die ursprüngliche Anordnungsposition zurückbewegt wird. Die Kabelführung oder Wellenschlauch wird somit mit einem bestimmten Spiel, insbesondere mit einem bestimmten Spiel in der Schlauchrichtung aufgenommen, wobei ein ungewolltes dauerhaftes Herausbewegen der Kabelführung oder des Wellenschlauchs aus der Vorrichtung und/oder ein (Über-)Dehnen der Kabelführung oder des Wellenschlauchs verhindert werden.

In einer Ausführungsform können eines, mehrere und/oder alle Mantelelemente, insbesondere an einer Außenseite der Mantelelemente, eine insbesondere eingeprägte Vertiefung, eine Führung, eine Sicke oder eine Nut aufweisen. Die Mantelelemente, insbesondere die Außenseite der Mantelelemente können ein Fertigungsmaterial mit Kunststoff, insbesondere mit Polymermaterial, Metall, Kohlenfasern, Kohlefaserverbundstoff, Keramik und/oder Glasmaterial aufweisen.

Ein Vorteil der insbesondere eingeprägten Führungen, Vertiefungen, Sicken oder Nuten ist, dass diese die Mantelelemente versteifen können und/oder eine Griffigkeit der Mantelelemente verbessern können.

Ferner können die Mantelelemente insbesondere dazu eingerichtet sein, mit einer der Außenseite gegenüberliegenden Innenseite an einer durch das Aufnahmeelement aufgenommenen Kabelführung oder an einem durch das Aufnahmeelement aufgenommenen Wellenschlauch und/oder an dem Längenausgleichselement anzuliegen. Hierdurch kann eine Führung für die aufgenommene Kabelführung oder den aufgenommenen Wellenschlauch und/oder das Längenausgleichselement hergestellt sein, welche insbesondere eine korrekte Anordnung der Kabelführung oder des Wellenschlauchs im Vorrichtungsinnenraum erleichtert und/oder verbessert und eine Bewegungsbahn für die Feder des Längenausgleichselements, insbesondere in Form von Führungsschienen, definiert oder herstellt. Die Bewegung der Feder mit der Kabelführungs- oder Wellenschlauchaufnahme kann hierdurch ohne wesentliches radiales Spiel erfolgen, welches einerseits zur Materialschonung der Feder beiträgt und ein Stauchen oder Auseinanderziehen der Feder erleichtert. Die Mantelelemente können insbesondere mit jenen Bereichen der Innenseite an einer durch das Aufnahmeelement aufgenommenen Kabelführung, insbesondere an einem Wellenschlauch, und/oder an dem Längenausgleichselement anliegen und/oder in Anlage gebracht werden, die einer insbesondere eingeprägten Vertiefung, Führung, Sicke oder Nut in der Außenseite der Mantelelemente gegenüberliegen.

Optional kann zumindest ein Rotationselement, zum Beispiel ein Metallstift oder ein Kunststoffstift, um das zumindest zwei der Mantelelemente um eine Rotationsachse schwenkbar gelagert sind, durch die zwei Mantelelemente, die um das Rotationselement schwenkbar gelagert sind, vollständig umschlossen sein. Mit anderen Worten können zumindest zwei Mantelelemente schwenkbar oder rotierbar durch ein, insbesondere zylinderförmiges, Rotationselement gelagert sein, wobei eines der Mantelelemente oder beide Mantelelemente im Zusammenwirken ein Gehäuse für das Rotationselement ausbilden, welches das Rotationselement zumindest teilweise, beispielsweise vollständig, umgibt.

Ein Vorteil hierbei ist, dass das Rotationselement vor in die Lagerung eindringendem Schmutz und vor in die Lagerung eindringenden Flüssigkeiten geschützt werden kann und eine Schmierung des Rotationselements in dem durch die Mantelelemente gebildeten Gehäuse verbleiben kann. Ferner wird die Handhabung der Vorrichtung dadurch erleichtert, dass ein Bediener der Vorrichtung nicht unbeabsichtigt in Kontakt mit einer Schmierung des Rotationselements oder Lagers gelangen kann. Darüber hinaus schützt das durch die Mantelelemente gebildete Gehäuse das Rotationselement vor Beschädigungen.

Der von den Mantelelementen umschlossene Vorrichtungsinnenraum kann einen zumindest im Wesentlichen zylinderförmigen Abschnitt aufweisen, der zur Aufnahme des Längenausgleichselements und/oder zumindest eines Teils einer Kabelführung oder eines Wellenschlauchs ausgebildet ist. Der Vorrichtungsinnenraum kann zum Beispiel einen zumindest im Wesentlichen zylinderförmigen Abschnitt aufweisen, der zur Aufnahme von Wellenschläuchen mit einem Durchmesser von beispielsweise ca. 70 mm, 56 mm oder 48 mm eingerichtet ist. Die zumindest zwei Vorrichtungsöffnungen, die auch nach einem Schwenken, Rotieren, Zuklappen oder Verschließen der Mantelelemente stets erhalten bleiben können und insbesondere zur Durchführung einer durch die Vorrichtung aufzunehmenden Kabelführung, insbesondere eines Wellenschlauchs, geeignet sind, können insbesondere Öffnungen eines zumindest im Wesentlichen zylinderförmigen Abschnitts des Vorrichtungsinnenraum sein.

Weiter kann der von den Mantelelementen umschlossene Vorrichtungsinnenraum einen zumindest im Wesentlichen quaderförmigen Abschnitt aufweisen, der insbesondere zur Aufnahme eines oder mehrerer Sensorelemente eingerichtet ist. Der zumindest eine im Wesentlichen quaderförmige Abschnitt des Vorrichtungsinnenraums kann zumindest teilweise von einem und/oder zumindest teilweise von mehreren Mantelelementen umschlossen sein. Ein Vorteil des zumindest einen im Wesentlichen quaderförmigen Abschnitts des Vorrichtungsinnenraums ist, dass dieser Abschnitt des Vorrichtungsinnenraums insbesondere zur Anordnung zusätzlicher Vorrichtungselemente, insbesondere von Sensorelementen, gut geeignet ist und dass die so im Vorrichtungsinnenraum angeordneten Vorrichtungselemente ebenfalls durch die Mantelelemente vor Verunreinigung und Beschädigung geschützt werden.

Zum Beispiel kann die Vorrichtung zumindest ein Sensorelement aufweisen, das dazu eingerichtet ist, eine Federausdehnung oder Federauslenkung der Feder des Längenausgleichselements zu erfassen, wobei das zumindest eine Sensorelement zum Beispiel ein optisch erfassendes Sensorelement sein kann. Alternativ kann das Sensorelement auch ein nicht-optisch erfassendes Sensorelement sein, zum Beispiel ein Zugkraftsensor oder ein Federsensor. In einer Variante kann das Sensorelement auch ein magnetisch erfassendes Sensorelement sein, zum Beispiel ein Hall-Sensor.

Optional kann eine Vorrichtung zur Aufnahme von Kabelführungen oder Wellenschläuchen eines oder mehrere Dichtungselemente aufweisen, die jeweils an und/oder in einer der Vorrichtungsöffnungen angeordnet und/oder dazu eingerichtet sind, an eine zumindest teilweise aufgenommene Kabelführung, insbesondere an einem Wellenschlauch, zum Beispiel an einem Wellenschlauch mit einem Durchmesser von beispielsweise ca. 70 mm, 56 mm oder 48 mm, anzuliegen. Die Dichtungselemente können jeweils dazu eingerichtet sein, eine der Vorrichtungsöffnungen im Zusammenwirken mit der aufgenommenen Kabelführung oder dem aufgenommenen Wellenschlauch zumindest im Wesentlichen staub- und/oder flüssigkeitsdicht zu verschließen. Hierdurch kann einer Verschmutzung des Vorrichtungsinnenraums entgegengewirkt werden.

Die Zahnung des Befestigungselements, welche zur Befestigung der Vorrichtung zur Aufnahme von Kabelführungen oder Wellenschläuchen an der Befestigungsvorrichtung vorgesehen ist, kann mehrere zueinander gleichartig oder zueinander verschiedenartig ausgeformte Materialvorsprünge und/oder Materialvertiefungen oder Materialeinkerbungen aufweisen. Mit anderen Worten kann die Zahnung mehrere Falze und mehrere Nuten ausbilden, die jeweils zu einem Eingriff in Falzen und Nuten, die durch eine (Gegen-)Zahnung der Befestigungsvorrichtung ausgebildet sind, und/oder die jeweils zu einer form- und/oder kraftschlüssigen Anlage mit Falzen und Nuten, die durch eine (Gegen-)Zahnung der Befestigungsvorrichtung ausgebildet sind, eingerichtet sind. Zumindest ein Teil der mehreren Materialvorsprünge und/oder Materialvertiefungen kann jeweils die Form eines Prismas, insbesondere die Form eines Trapezprismas oder eine Quaderform, aufweisen.

Die Zahnung des Befestigungselements kann mehrere Materialdurchbrüche und/oder mehrere Materialöffnungen aufweisen, insbesondere einen oder mehrere Materialdurchbrüche und/oder einen oder mehrere Materialöffnungen in jedem der zueinander gleichartig oder zueinander verschiedenartig ausgeformten Materialvorsprünge.

Optional kann das Befestigungselement dazu eingerichtet sein, mit einem oder mehreren Befestigungsbolzen und/oder mit einem oder mehreren Befestigungsclips lösbar an der Befestigungsvorrichtung befestigt zu werden. Der oder die Befestigungsbolzen und/oder der oder die Befestigungsclip/s können jeweils sowohl in vorbereitete Öffnungen in dem Befestigungselement als auch in vorbereitete Öffnungen in der Befestigungsvorrichtung, insbesondere in die Materialdurchbrüche und/oder die Materialöffnungen in den mehreren Materialvorsprüngen, eingreifen. Weiter können die Befestigungsbolzen und/oder die Befestigungsclips insbesondere jeweils in einer zu der/den Rotationsachse/n parallelen Richtung oder in einer zu der/den Rotationsachse/n orthogonalen Richtung in die vorbereiteten Öffnungen in dem Befestigungselement und in die vorbereiteten Öffnungen in der Befestigungsvorrichtung einführbar sein. Ein Vorteil hierbei ist, dass das Befestigungselement ohne zusätzliches und/oder spezielles Werkzeug mit der Befestigungsvorrichtung verbunden werden und/oder auch wieder von dieser gelöst werden kann. Die Montage der Vorrichtung zur Aufnahme von Kabelführungen oder Wellenschläuchen kann hierdurch vereinfacht und beschleunigt werden.

In einer Variante kann das Befestigungselement ein erstes zumindest teilweise elastisch deformierbares Einrastelement aufweisen, das dazu angeordnet und ausgebildet ist, in einer ersten Vertiefung, insbesondere in eine erste Hinter- oder Unterschneidung, in einer ersten Seitenfläche einer Befestigungsvorrichtung angeordnet zu werden. Weiter kann das Befestigungselement ein zweites zumindest teilweise elastisch deformierbares Einrastelement aufweisen, das dazu angeordnet und ausgebildet ist, in einer zweiten Vertiefung, insbesondere in einer zweiten Hinter- oder Unterschneidung in einer der ersten Seitenfläche gegenüberliegenden zweiten Seitenfläche einer Befestigungsvorrichtung angeordnet zu werden. Das erste und das zweite Einrastelement können zueinander asymmetrisch ausgebildet sein.

Das erste zumindest teilweise elastisch deformierbare Einrastelement kann zum Beispiel einen zumindest teilweise elastisch deformierbaren Steg und/oder eine zumindest teilweise elastisch deformierbare Wandung umfassen und/oder einen Materialvorsprung oder eine Materialausbuchtung, die an dem Steg oder der Wandung angeordnet und dazu ausgebildet ist, in eine seitlich an der Befestigungsvorrichtung angeordnete Vertiefung, welche insbesondere eine Hinter- oder Unterschneidung ist, einzugreifen. Auch das zweite zumindest teilweise elastisch deformierbare Einrastelement kann optional einen zumindest teilweise elastisch deformierbaren Steg und/oder eine zumindest teilweise elastisch deformierbare Wandung umfassen und/oder einen Materialvorsprung oder eine Materialausbuchtung, die an dem Steg oder der Wandung angeordnet und dazu ausgebildet ist, in eine seitlich an der Befestigungsvorrichtung angeordnete Vertiefung, welche insbesondere eine Hinter- oder Unterschneidung ist, einzugreifen. Das erste und das zweite zumindest teilweise elastisch deformierbare Einrastelement können sich zum Beispiel dadurch unterscheiden, dass der Materialvorsprung oder die Materialausbuchtung des ersten Einrastelements gegenüber dem Steg oder der Wandung, an der er/sie angeordnet ist, deutlicher/höher/größer/weiter abgesetzt oder erhaben und/oder vorstehend ausgebildet ist, als der Materialvorsprung oder die Materialausbuchtung des zweiten Einrastelements gegenüber dem Steg oder der Wandung, an der er/sie angeordnet ist, abgesetzt oder erhaben und/oder vorstehend ist. Mit anderen Worten kann der Materialvorsprung des ersten Einrastelements größer sein und/oder weiter gegenüber dem Steg oder der Wandung des Einrastelements vorstehen als der Materialvorsprung des zweiten Einrastelements. Korrespondierend hierzu können auch die Vertiefungen, welche insbesondere Hinter- oder Unterschneidungen sind, in der Befestigungsvorrichtung asymmetrisch ausgebildet sein.

Ein Vorteil der zueinander asymmetrischen Einrastelemente ist, dass das Befestigungselement, insbesondere mit einer Drehbewegung, einfach und ohne zusätzliches Werkzeug an der Befestigungsvorrichtung angeordnet und befestigt werden kann, ein unbeabsichtigtes Lösen des Befestigungselements von der Befestigungsvorrichtung jedoch erheblich erschwert ist. Aufgrund der asymmetrischen Ausgestaltung der Einrastelemente ist zum Lösen des Befestigungselements von der Befestigungsvorrichtung eine jeweils zumindest teilweise ausgeführte Kipp- und Zugbewegung notwendig, welche zumindest nur selten unbeabsichtigt durch einen Bediener der Vorrichtung ausgeführt wird oder durch eine Kollision der Vorrichtung mit anderen Maschinenteilen zustande kommt.

Die Materialvorsprünge und/oder Materialvertiefungen der Zahnung können jeweils zumindest eine gerade Kante aufweisen, die jeweils parallel oder orthogonal zu der/den Rotationsachse/n angeordnet ist oder parallel oder orthogonal zu der/den Rotationsachse/n verläuft.

Die Zahnung des Befestigungselements kann an einer Oberfläche des Befestigungselements angeordnet sein. Alternativ oder ergänzend kann die Zahnung des Befestigungselements auch an einem Verriegelungsfortsatz des Befestigungselements angeordnet sein.

Der Verriegelungsfortsatz kann um eine Befestigungselementachse schwenkbar an einem weiteren Bestandteil des Befestigungselements, zum Beispiel an einem Befestigungselementgrundkörper, angeordnet sein. Die Befestigungselementachse kann insbesondere parallel zu der/den Rotationsachse/n der Mantelelemente angeordnet sein.

Die an dem Verriegelungsfortsatz angeordnete Zahnung kann dazu eingerichtet sein, durch eine Schwenkung des Verriegelungsfortsatzes um die Befestigungselementachse zumindest teilweise formschlüssig mit der Zahnung der Befestigungsvorrichtung in Eingriff gebracht zu werden. Weiter kann die an dem Verriegelungsfortsatz angeordnete Zahnung dazu eingerichtet sein, durch eine Schwenkung des Verriegelungsfortsatzes um die Befestigungselementachse zumindest teilweise von der Zahnung der Befestigungsvorrichtung gelöst zu werden.

Ein Vorteil des schwenkbaren Verriegelungselements mit einer Zahnung ist, dass eine Oberfläche des Befestigungselements auch ohne Zahnung ausgebildet werden kann, was ein Gleiten oder Verschieben des Befestigungselements über die Zahnung einer Befestigungsvorrichtung erlaubt. Das Befestigungselement kann somit zuerst in einer Richtung parallel zur Befestigungselementachse über die Zahnung einer Befestigungsvorrichtung verschoben oder bewegt werden und, nachdem eine gewünschte Position in einer Richtung parallel zur Befestigungselementachse erreicht wurde, mittels des schwenkbaren Verriegelungselements an der Befestigungsvorrichtung fixiert werden. Das Fixieren des Befestigungselements an der Befestigungsvorrichtung kann dadurch erreicht werden, dass eine an dem Verriegelungsfortsatz angeordnete Zahnung durch eine Schwenkung des Verriegelungsfortsatzes um die Befestigungselementachse zumindest teilweise formschlüssig mit der Zahnung der Befestigungsvorrichtung in Eingriff gebracht wird.

Optional kann der Verriegelungsfortsatz zumindest ein, insbesondere elastisch deformierbares, Verriegelungsfortsatzeinrastelement aufweisen, das dazu eingerichtet ist, den Verriegelungsfortsatz an dem Aufnahmeelement und/oder an einem der Mantelelemente des Aufnahmeelements und/oder an der Befestigungsvorrichtung zu fixieren, wenn die an dem Verriegelungsfortsatz angeordnete Zahnung mit der Zahnung der Befestigungsvorrichtung in Eingriff gebracht wird.

Ein Vorteil des, insbesondere elastisch deformierbaren, Verriegelungsfortsatzeinrastelements ist, dass hierdurch ein unberücksichtigtes Ablösen des Verriegelungsfortsatzes von dem Aufnahmeelement und/oder von der Befestigungsvorrichtung verhindert werden kann. Optional kann der Verriegelungsfortsatz mit dem Verriegelungsfortsatzeinrastelement dazu eingerichtet sein, gegen einen Druckwiderstand wieder von dem Aufnahmeelement und/oder von einem der Mantelelemente des Aufnahmeelements und/oder von der Befestigungsvorrichtung abgelöst zu werden, sodass die durch das Verriegelungsfortsatzeinrastelement bewirkte Fixierung aufgehoben wird.

Eine hier offenbarte Befestigungsvorrichtung hat eine Zahnung, die dazu eingerichtet ist, zumindest teilweise formschlüssig an dem Befestigungselement einer vorangehend beschriebenen Vorrichtung angeordnet zu werden. Die Befestigungsvorrichtung als solche kann bereits in einen Roboter oder in eine Maschine und/oder in eine Gebäudeinstallation oder in ein Gebäudeelement integriert sein und/oder an diesen Gegenständen, zum Beispiel mit einer Schraubverbindung, angeordnet sein.

In einer Ausführungsform kann die Befestigungsvorrichtung dazu eingerichtet sein, mit einer Schraubverbindung an einem Roboter, an einer Maschine und/oder an einem Gebäudeelement angeordnet zu werden oder angeordnet zu sein.

Die Zahnung des Befestigungselements und/oder die Zahnung der Befestigungsvorrichtung können dazu eingerichtet sein, jeweils mehrere mögliche Anordnungspositionen des Befestigungselements an der Befestigungsvorrichtung zuzulassen. Mit anderen Worten kann die Zahnung des Befestigungselements und/oder die Zahnung der Befestigungsvorrichtung dazu eingerichtet sein, eine Anordnungsposition des Befestigungselements an der Befestigungsvorrichtung nicht festzulegen. Die Anordnungsposition des Befestigungselements an der Befestigungsvorrichtung kann variabel sein.

Optional kann die Befestigungsvorrichtung ferner einen oder mehrere, insbesondere zwei, Kabelführungsarme aufweisen, die an der Befestigungsvorrichtung angeordnet und dazu ausgebildet sind, einen Teil oder einen Abschnitt einer Kabelführung, insbesondere eines Wellenschlauchs oder Wellenrohrs, der nicht im Vorrichtungsinnenraum des Aufnahmeelements angeordnet ist, in einer vorbestimmten Position zu fixieren und/oder anzuordnen. Die Kabelführungsarme können insbesondere von der Befestigungsvorrichtung seitlich abstehende Anordnungselemente, Stege oder Materialvorsprünge sein. Optional können die, insbesondere seitlich abstehenden, Kabelführungsarme dazu geeignet sein, einen Teil oder einen Abschnitt einer Kabelführung, insbesondere eines Wellenschlauchs oder Wellenrohrs, der nicht im Vorrichtungsinnenraum des Aufnahmeelements aufgenommen ist, parallel zu jenem Teil oder Abschnitt der Kabelführung, insbesondere des Wellenschlauchs oder des Wellenrohres, anzuordnen, der im Vorrichtungsinnenraum des Aufnahmeelements aufgenommen ist. Mit anderen Worten können die Kabelführungsarme dazu eingerichtet sein, zumindest abschnittsweise einen bestimmten Verlauf oder eine Anordnung der Kabelführung, insbesondere des Wellenschlauchs oder des Wellenrohrs, außerhalb des Innenraums der Aufnahmevorrichtung vorzugeben, herzustellen oder zumindest zu unterstützen. Optional kann dieser abschnittsweise Verlauf der Kabelführung, insbesondere des Wellenschlauchs oder des Wellenrohrs, parallel zu jenem Teil oder Abschnitt der Kabelführung, insbesondere des Wellenschlauchs oder des Wellenrohrs, angeordnet sein, der durch die Aufnahmevorrichtung aufgenommen und im Vorrichtungsinnenraum angeordnet ist.

Ein hier offenbartes Kabelführungs- oder Wellenschlauchbefestigungssystem weist zudem zumindest eine der vorangehend beschriebenen Vorrichtungen zur Aufnahme von Kabelführungen oder Wellenschläuchen, zumindest eine der vorangehend beschriebenen Befestigungsvorrichtungen und/oder zumindest eine Kabelführung oder einen Wellenschlauch auf, wobei die Kabelführung oder der Wellenschlauch zumindest teilweise im Vorrichtungsinnenraum des Aufnahmeelements der Vorrichtung zur Aufnahme von Kabelführungen oder Wellenschläuchen angeordnet ist.

Weitere Merkmale, Eigenschaften, Vorteile und mögliche Abwandlungen werden für einen Fachmann anhand der nachstehenden Beschreibung deutlich, in der auf die beigefügten Zeichnungen Bezug genommen ist. Dabei zeigen alle beschriebenen und/oder bildlich dargestellten Merkmale für sich oder in beliebiger Kombination den hier offenbarten Gegenstand. Die Abmessungen und Proportionen der in den Figuren gezeigten Vorrichtungen und Komponenten sind nicht maßstäblich

Die Zeichnungen zeigen stellvertretend für alle Arten von Kabelführungen jeweils Ausführungsformen von Vorrichtungen, die zur Aufnahme von Wellenschläuchen eingerichtet sind. Die gezeigten Vorrichtungen eignen sich jedoch im gleichen Maße auch für die Aufnahme von Wellenrohren und/oder weiteren Kabelführungen, zum Beispiel von Glattrohren oder Glattschläuchen zur Kabelführung. Die schematischen Zeichnungen betreffen daher ebenso wie die nachfolgende, auf die Zeichnungen bezogene, Beschreibung jeweils auch Vorrichtungen zur Aufnahme von Kabelführungen, die keine Wellenschläuche sind, wobei lediglich stellvertretend für alle Kabelführungen Wellenschläuche beschrieben und gezeigt werden.
- Fig. 1: zeigt schematisch ein Beispiel für eine Vorrichtung zur Aufnahme von Wellenschläuchen.
- Fig. 2: zeigt schematisch ein Beispiel für ein Aufnahmeelement einer Vorrichtung zur Aufnahme von Wellenschläuchen in einer Schnittdarstellung, wobei das Aufnahmeelement zwei miteinander verbundene und um eine Rotationsachse schwenkbare Mantelelemente aufweist, die gemeinsam einen Vorrichtungsinnenraum umschließen.
- Fig. 3: zeigt schematisch ein Beispiel für ein in einem Vorrichtungsinnenraum einer Vorrichtung zur Aufnahme von Wellenschläuchen angeordnetes Längenausgleichselement mit einer Feder.
- Fig. 4: zeigt schematisch ein Beispiel für ein Aufnahmeelement einer Vorrichtung zur Aufnahme von Wellenschläuchen in einer Schnittdarstellung, wobei das Aufnahmeelement drei miteinander verbundene und um jeweils eine Rotationsachse schwenkbare Mantelelemente aufweist, die gemeinsam einen Vorrichtungsinnenraum zumindest teilweise umschließen.
- Fig. 5: zeigt schematisch ein Beispiel für die Freigabe eines Vorrichtungsinnenraums einer Vorrichtung zur Aufnahme von Wellenschläuchen durch ein Schwenken mehrerer Mantelelemente in einer Schnittdarstellung.
- Fig. 6: zeigt schematisch ein Beispiel für ein Verschlusselement für eine Vorrichtung zur Aufnahme von Wellenschläuchen.
- Fig. 7: zeigt schematisch ein Beispiel für eine Vorrichtung zur Aufnahme von Wellenschläuchen mit einem im Wesentlichen quaderförmigen Vorrichtungsinnenraumabschnitt.
- Fig. 8: zeigt schematisch ein Beispiel für ein in einem Vorrichtungsinnenraum einer Vorrichtung zur Aufnahme von Wellenschläuchen angeordnetes Längenausgleichselement mit einer Feder und mit einem Sensorelement zur Messung einer Federausdehnung.
- Fig. 9: zeigt schematisch ein Beispiel für ein in einem Vorrichtungsinnenraum einer Vorrichtung zur Aufnahme von Wellenschläuchen angeordnetes Längenausgleichselement mit einer Feder und mit zwei Sensorelementen zur Messung einer Federausdehnung.
- Fig. 10 A/B: zeigen schematisch ein Beispiel für das Zusammenwirken eines Befestigungselements mit einer Zahnung und einer Befestigungsvorrichtung mit einer korrespondierenden Gegenzahnung.
- Fig. 11: zeigt schematisch ein Beispiel für ein Befestigungselement einer Vorrichtung zur Aufnahme von Wellenschläuchen.
- Fig. 12: zeigt schematisch ein Beispiel für eine Vorrichtung zur Aufnahme von Wellenschläuchen mit einem Befestigungselement, wobei die Vorrichtung mit dem Befestigungselement auf einer Befestigungsvorrichtung angeordnet ist, in einer Schnittdarstellung.
- Fig. 13: zeigt schematisch ein Beispiel für eine Vorrichtung zur Aufnahme von Wellenschläuchen mit einem Befestigungselement, welches ein erstes und ein zweites Einrastelement umfasst, wobei die Vorrichtung mit dem Befestigungselement auf einer Befestigungsvorrichtung angeordnet ist, in einer Schnittdarstellung.
- Fig. 14 A-C: zeigen schematisch ein Beispiele für eine Vorrichtung zur Aufnahme von Wellenschläuchen mit einem Befestigungselement, wobei die Vorrichtung mit dem Befestigungselement auf einer Befestigungsvorrichtung angeordnet und mit Befestigungsclips oder Verriegelungsfortsätzen fixiert ist, in einer Schnittdarstellung.

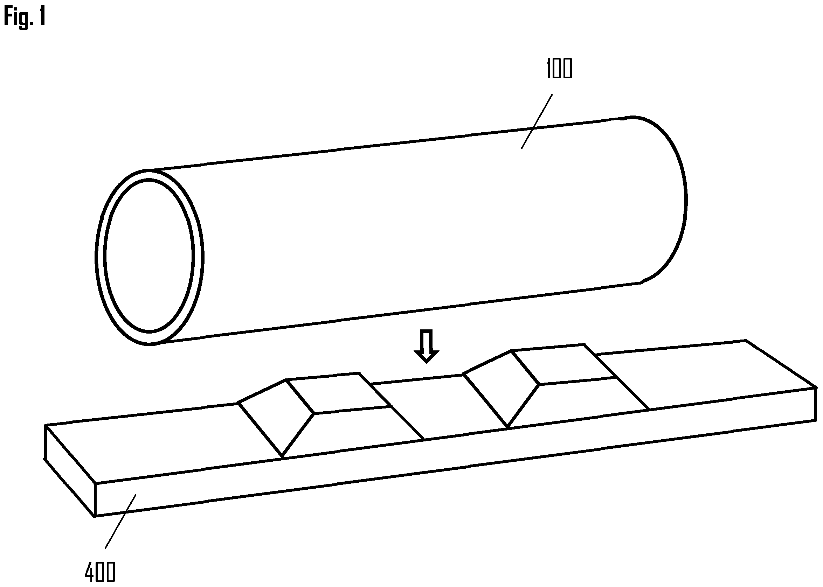

Sofern nicht explizit anders angegeben, sind übereinstimmende oder in ihrer Funktion vergleichbare Komponenten und Bestandteile in den schematischen Figuren 1 bis 14C mit übereinstimmenden Bezugszeichen versehen. Die Figuren sind explizit schematisch und explizit nicht maßstabsgetreu gezeichnet.

Die Figur 1 zeigt schematisch ein Beispiel für eine Vorrichtung zur Aufnahme von Wellenschläuchen mit einem rohrförmigen Aufnahmeelement 100, das an einer Befestigungsvorrichtung oder Befestigungsschiene 400 angeordnet ist. Das rohrförmige Aufnahmeelement 100 ist hierbei dazu eingerichtet, einen durch es hindurchgeführten Wellenschlauch, zum Beispiel für einen Roboterarm (nicht gezeigt), an einer bestimmten Position, nämlich im Bereich der Befestigungsvorrichtung 400 anzuordnen. Der Schlauch kann hierbei, zum Beispiel durch die Bewegung eines Roboterarms, in der Schlauchlängenrichtung durch das rohrförmige Aufnahmeelement 100 hindurchgezogen oder hindurchbewegt werden. Weiter ist es zur Anordnung eines Wellenschlauchs in das rohrförmige Aufnahmeelement 100 nötig, den Wellenschlauch beginnend mit einem Wellenschlauchende zumindest teilweise durch das rohrförmige Aufnahmeelement 100 hindurchzuführen, welches insbesondere eine nachträgliche Anordnung eines bereits installierten Wellenschlauchs in die gezeigte Vorrichtung zur Aufnahme von Wellenschläuchen erforderlich macht.

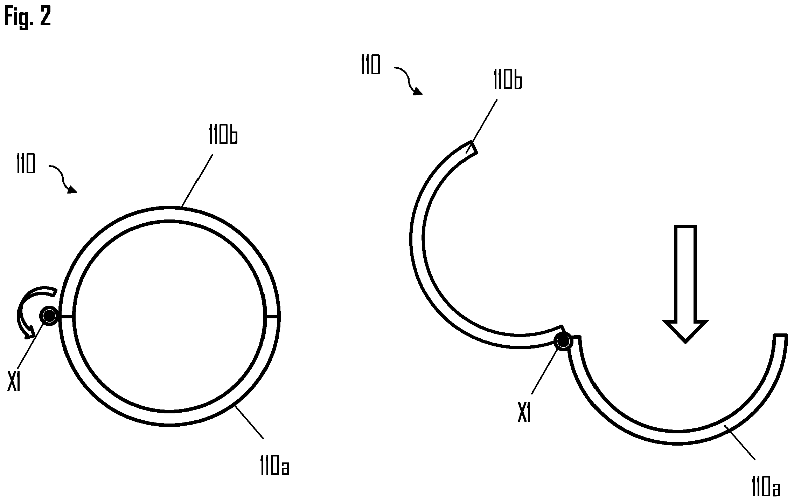

Figur 2 zeigt schematisch ein Beispiel für ein Aufnahmeelement 110 einer Vorrichtung zur Aufnahme von Wellenschläuchen in einer Schnittdarstellung. Das Aufnahmeelement 110 weist zwei miteinander verbundene und um eine Rotationsachse X1 schwenkbare Mantelelemente 110a und 110b auf, die gemeinsam einen Vorrichtungsinnenraum umschließen. Wie in der Figur 2 schematisch gezeigt, erlaubt es die zueinander schwenkbare Anordnung der Mantelelemente 110a und 110b, den Vorrichtungsinnenraum des Aufnahmeelements 110 zumindest zeitweise freizulegen oder zu öffnen, sodass ein Wellenschlauch (nicht gezeigt) in die Vorrichtung hinein angeordnet werden kann. Dieses ist insbesondere zur Anordnung eines bereits installierten oder zumindest teilweise installierten Wellenschlauchs vorteilhaft, da der Wellenschlauch nicht beginnend mit einem Wellenschlauchende durch den Vorrichtungsinnenraum hindurchgeführt werden muss. Wie anhand der in der Figur 2 gezeigten Schnittdarstellung einsichtig, ist jedes der zwei Mantelelemente 110a und 110b halbrohrförmig. Dieses ist bei genau zwei zueinander schwenkbaren Mantelelementen 110a und 110b vorteilhaft oder alternativlos, da ansonsten ein den vollen Durchmesser des Vorrichtungsinnenraums ausnutzender Wellenschlauch zumindest in eines der Mantelelemente nicht eingeführt werden könnte. Die Anordnung des Wellenschlauchs oder Wellenrohrs muss daher aus einer zum freigegeben Vorrichtungsinnenraum im wesentlichen orthogonalen Richtung erfolgen.

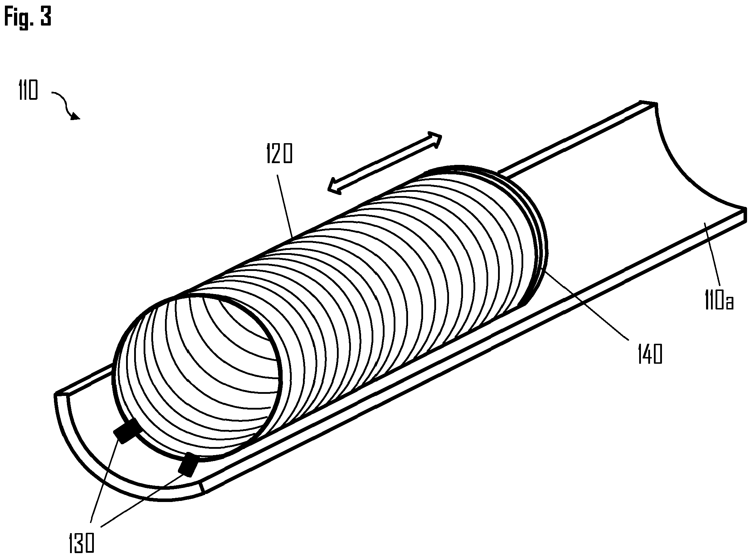

Figur 3 zeigt schematisch ein Beispiel für ein in einem Vorrichtungsinnenraum einer Vorrichtung zur Aufnahme von Wellenschläuchen angeordnetes Längenausgleichselement mit einer Feder 120. Das gezeigte Längenausgleichselement ist im Innenraum des in der Figur 2 gezeigten Aufnahmeelements 110 angeordnet. Aus Übersichtsgründen ist jedoch nur ein Teil des schwenkbaren Mantelelements 110a in der Figur 3 gezeigt. Das Längenausgleichselement hat eine Feder 120 aus Federstahl. Die Feder 120 ist an dem Mantelelements 110a mit zwei Federanordnungselementen 130 befestigt. In anderen, nicht gezeigten Beispielen, kann die Feder jedoch auch mit einer hiervon abweichenden Anzahl von Federanordnungselementen und/oder ohne Federanordnungselemente, insbesondere unelastisch, an einem der Mantelelemente befestigt werden. Weiter hat die gezeigte Feder 120 eine Wellenschlauchaufnahme 140, die dazu eingerichtet ist, an einem Wellenschlauch (nicht gezeigt) unelastisch befestigt zu werden, sodass eine Bewegung des Wellenschlauchs in der Längs- oder Wellenschlauchrichtung ausschließlich in Verbindung mit dem Stauchen oder Auseinanderziehen der Feder 120 möglich ist. Der Wellenschlauch wird hierbei durch die Feder 120 und die Wellenschlauchaufnahme 120 hindurchgeführt, sodass die Feder 120 und die Wellenschlauchaufnahme 140 den aufgenommenen Wellenschlauch umgeben. Der durch die Wellenschlauchaufnahme 140 mit der Feder 120 des Längenausgleichselements verbundene Wellenschlauch bleibt hierdurch, wenn auch gegen einen Federwiderstand, in der Längs- oder Wellenschlauchrichtung beweglich. Nachdem eine auf den Wellenschlauch einwirkende (Zug-)Kraft jedoch aufgehoben oder beendet wird, bewegt die Feder 120 den Wellenschlauch wieder in die ursprüngliche Anordnungsposition. Einer dauerhaften Verschiebung oder Verlagerung des Wellenschlauchs durch eine lediglich temporär einwirkende Zugkraft wird hierdurch entgegengewirkt. In anderen, nicht gezeigten Ausführungsformen, kann die Feder so im Innenraum des Aufnahmeelements angeordnet werden, dass sie bereits dann eine (Feder-)Vorspannung aufweist, wenn keine externe (Zug-)Kraft auf einen aufgenommenen Wellenschlauch einwirkt. Hierdurch kann einer auf den Wellenschlauch ausgeübten (Zug-)Kraft stärker entgegengewirkt werden.

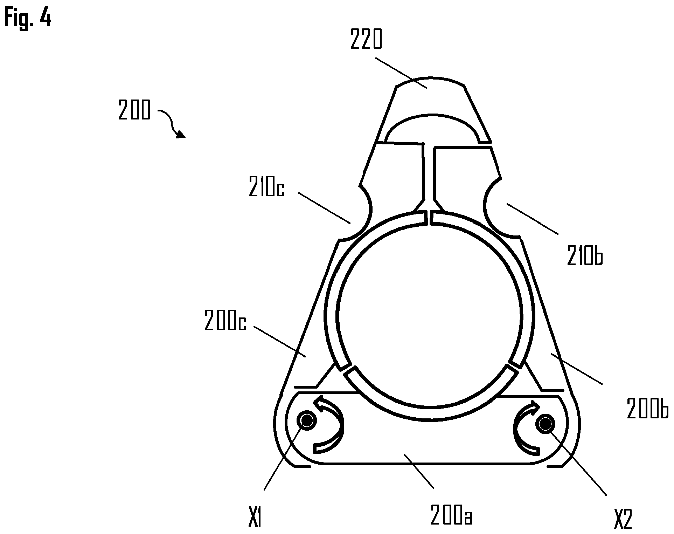

Die Figur 4 zeigt schematisch ein Beispiel für ein Aufnahmeelement 200 einer Vorrichtung zur Aufnahme von Wellenschläuchen in einer Schnittdarstellung, wobei das Aufnahmeelement 200 drei miteinander verbundene und um jeweils eine Rotationsachse X1 oder X2 schwenkbare Mantelelemente 200a, 200b und 200c aufweist, die gemeinsam einen Vorrichtungsinnenraum zumindest teilweise umschließen.

Wie mit der Figur 4 verdeutlicht, kann ein Aufnahmeelement 200 auch mehr als zwei, zum Beispiel drei, zueinander schwenkbare Mantelelemente aufweisen. Die drei zueinander schwenkbaren Mantelelemente 200a, 200b und 200c sind jeweils um eine Rotationsachse X1, X2 schwenkbar an zumindest einem weiteren Mantelelement angeordnet. So ist das Mantelelement 200a um die Rotationsachse X1 schwenkbar mit dem Mantelelement 200c verbunden und um die Rotationsachse X2 schwenkbar mit dem Mantelelement 200b verbunden.

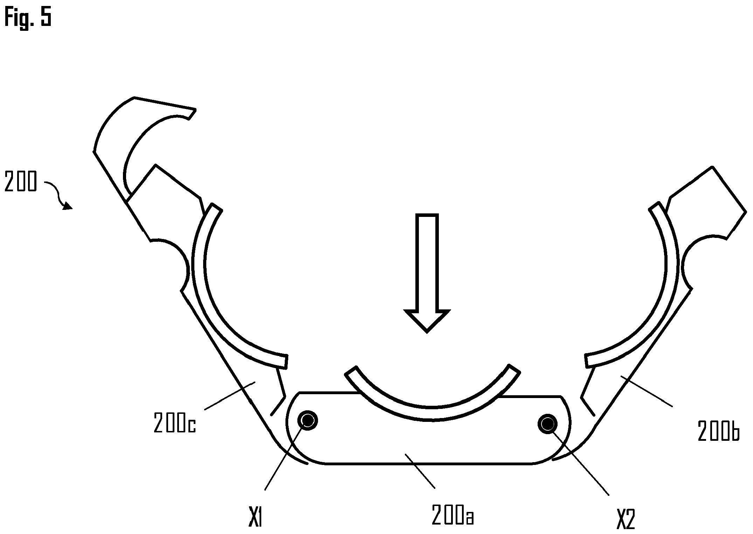

Wie mit der Figur 5 gezeigt, erlaubt es die Anordnung von zumindest drei zueinander schwenkbaren Mantelelementen 200a, 200b, 200c einen wesentlich größeren Öffnungswinkel zur zumindest zeitweisen Freilegung des Vorrichtungsinnenraums zu realisieren als die in der Figur 2 gezeigte Anordnung mit lediglich zwei schwenkbar miteinander verbundenen Mantelelementen. Ein Vorteil hierbei ist, dass ein in den Vorrichtungsinnenraum hinein anzuordnender Wellenschlauch auch aus anderen Richtungen als aus einer zu einem Halbrohr im Wesentlichen orthogonalen Richtung in den Vorrichtungsinnenraum eingeführt werden kann. Mit anderen Worten ist ein möglicher Anordnungswinkel für einen Wellenschlauch (nicht gezeigt) wesentlich breiter, welches insbesondere für die Installation von bereits zum Teil vorinstallierten besonders vorteilhaft ist, da diese in Vorrichtungen mit zumindest drei Mantelelementen, eine entsprechende Rotation oder Schwenkung der Mantelelemente vorausgesetzt, auch aus einer zum Beispiel zu Befestigungsvorrichtung seitlichen Richtung in das Aufnahmeelement hinein angeordnet werden können. Zudem ist eine Vorrichtung mit zumindest drei Mantelelementen gegenüber der in der Figur 2 gezeigten Vorrichtung flexibler und komfortabler einsetzbar.

Weiter zeigen die Figuren 4 und 5, dass zumindest einige der Mantelelemente, zum Beispiel die Mantelelemente 200b und 200c, eingeprägte Vertiefungen oder Sicken 210b und 210c aufweisen können, die mehrfach vorteilhaft zur Funktion der Vorrichtung beitragen können. Zum einen können die Vertiefungen oder Sicken 210b und 210c die Mantelelemente, die zum Beispiel aus einem Polymermaterial oder aus einem Metall gefertigt sein können, versteifen und/oder stabilisieren, sodass auch eine materialsparende Implementierung der Mantelelemente mit vergleichsweise geringeren Materialstärken für die Außenwandungen der Mantelelemente ermöglicht wird. Weiter können die eingeprägten Vertiefungen oder Sicken 210b und 210c auf der der Außenseite gegenüberliegenden Innenseite der Mantelelemente Führungsschienen für einen aufzunehmenden Wellenschlauch und/oder für eine Feder eines Längenausgleichselements (in den Figuren 4 und 5 nicht gezeigt) ausbilden, welche eine bestimmte vorgesehene Anordnung des Wellenschlauchs und/oder der Feder im Vorrichtungsinnenraum des, insbesondere nach der Anordnung des Wellenschlauchs wieder geschlossenen, Aufnahmeelements 200 erzwingen oder zumindest unterstützen können.

Ferner weist die in den Figuren 4 und 5 gezeigte Vorrichtung zumindest zwei Metallstifte auf, die als Lagerelemente für die um die Achsen X1 und/oder X2 schwenkbar gelagerten Mantelelemente 200a, 200b und 200c dienen. Im gezeigten Beispiel sind diese Lagerelemente vollständig von den Mantelelementen 200a, 200b und 200c umschlossen, sodass sie vor Verschmutzung, Beschädigung oder dem Austritt von Schmiermittel geschützt sind.

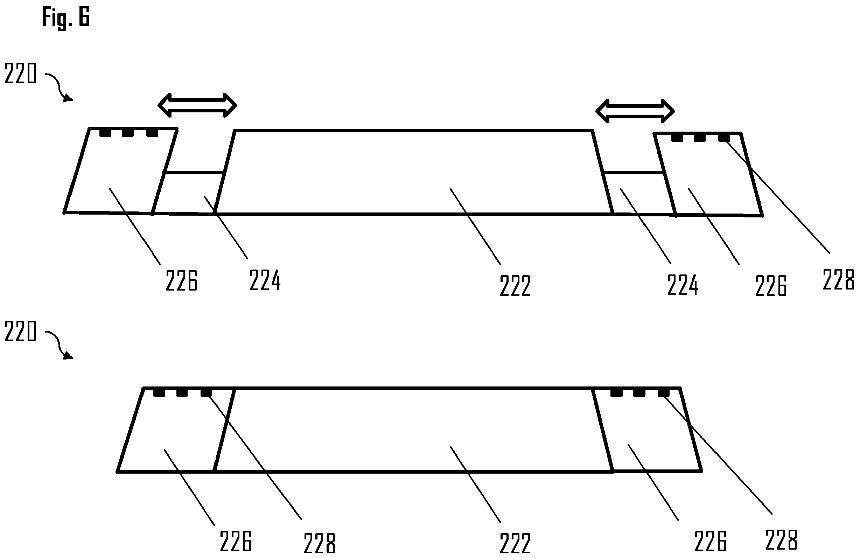

Zudem zeigen die Figuren 4 und 5 das Verschlusselement 220 (Verschlussvorrichtung), das an dem Mantelelement 200c befestigt ist und in der Figur 6 in einer Seitenansicht gezeigt ist. Das Verschlusselement 220 umfasst neben einem unbeweglich an dem Mantelelement 200c angeordneten Zentralelement 222 die beiden ebenfalls an dem Mantelelement 200c angeordneten Verschlussschienen 224, die dazu eingerichtet sind, mit einem jeweils korrespondierend ausgeformten Abschnitt des Mantelelements 200b formschlüssig in Anlage gebracht zu werden. Sobald diese formschlüssige Anlage zwischen den Verschlussschienen 224 und den hierzu korrespondierend ausgeformten Abschnitten des Mantelelements 200b hergestellt ist, können die in der Richtung parallel zu den Rotationsachsen X1 und X2 beweglichen Verriegelungselemente 226 in eine Anlage mit den Verschlussschienen 224 und den hierzu korrespondierend ausgeformten Abschnitten des Mantelelements 200b gebracht oder bewegt werden. Die Verriegelungselemente 226 können hierzu von einem Bediener der Vorrichtung über die Verschlussschienen 224 und die hierzu korrespondierend ausgeformten Abschnitte des Mantelelements 200b geschoben werden. Die Verriegelungselemente 226 umgeben in dieser Stellung, nämlich in der Verriegelungsstellung, sowohl die Verschlussschienen 224 als auch die hierzu korrespondierend ausgeformten Abschnitte des Mantelelements 200b zumindest formschlüssig und verhindern somit eine Lösung der Verschlussschienen 224 von den korrespondierend ausgeformten Abschnitten des Mantelelements 200b. Zur Freigabe des Verschlusselement 220 und zur Zugänglichmachung des Vorrichtungsinnenraums können die Verriegelungselemente 226 zu einem späteren Zeitpunkt in die Ausgangsposition vor der Verriegelung der Vorrichtung und/oder vor der Befestigung der Mantelelemente 200b und 200c aneinander zurückbewegt werden. Um die Handhabbarkeit des Verschlusselements 220 weiter zu verbessern und insbesondere ein unbeabsichtigtes Abrutschen eines Bedieners von den Verriegelungselementen 226 zu verhindern weisen die Verriegelungselemente 226 jeweils Handhabungsrillen 228 auf ihrer Oberfläche auf. Ein Vorteil des Verschlusselements 220 ist, dass der Vorrichtungsinnenraum ohne den Einsatz von Werkzeugen von einem Bediener der Vorrichtung zur Anordnung oder zur Entfernung eines angeordneten Wellenschlauchs zugänglich gemacht werden kann.

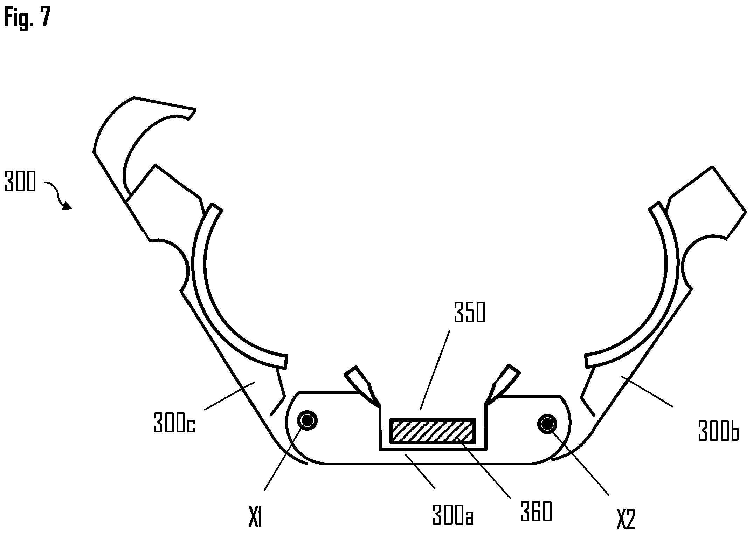

Figur 7 zeigt mit einer Schnittdarstellung, dass der Vorrichtungsinnenraum eines Aufnahmeelements 300 mit drei um jeweils eine Achse X1 und/oder X2 schwenkbaren Mantelelementen 300a, 300b und 300c neben einem im Wesentlichen zylinderförmigen Abschnitt zur Aufnahme eines Wellenschlauchs (nicht gezeigt) auch einen im Wesentlichen quaderförmigen Vorrichtungsinnenraumabschnitt 350 aufweisen kann, in welchem weitere Vorrichtungselemente, zum Beispiel das Sensorelement 360 und/oder weitere Vorrichtungselemente, angeordnet sein können.

Die Figur 7 zeigt, dass der im Wesentlichen quaderförmige Vorrichtungsinnenraumabschnitt 350 zumindest teilweise von dem Mantelelement 300a umgeben und umformt ist, jedoch sind in weiteren, nicht gezeigten, Ausführungsformen auch mit im Wesentlichen quaderförmigen Vorrichtungsinnenraumabschnitten, die von mehreren, insbesondere zwei, schwenkbaren Mantelelementen zumindest teilweise umformt oder umgeben werden, möglich.

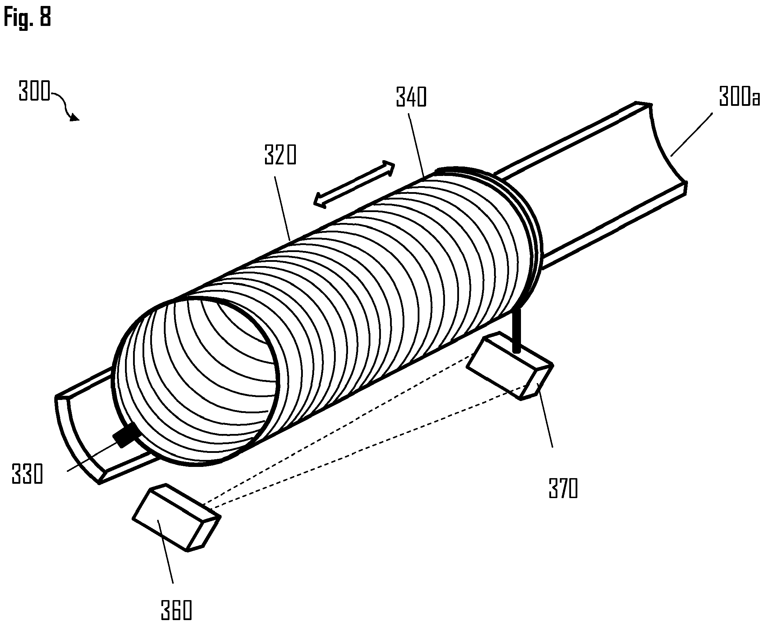

Figur 8 zeigt ein Beispiel für die Anordnung eines Sensorelements 360 und eines Reflexionselements 370 in dem in der Figur 7 schematisch gezeigten im Wesentlichen quaderförmigen Vorrichtungsinnenraumabschnitt 350 der Vorrichtung zur Aufnahme von Wellenschläuchen mit dem Aufnahmeelement 300. Korrespondierend zu dem in der Figur 3 gezeigten und vorangehend beschriebenen Längenausgleichselement zeigt auch die Figur 8 eine Feder 320, die mittels zumindest eines Federanordnungselements 130 an dem aus Übersichtsgründen nur teilweise schematisch gezeigten Mantelelement 300a befestigt ist. Korrespondierend zu dem in der Figur 3 gezeigten und vorangehend beschriebenen Längenausgleichselement hat auch die in der Figur 8 gezeigte Feder 320 eine Wellenschlauchaufnahme 340, welche korrespondierend zu der in der Figur 3 gezeigten Wellenschlauchaufnahme ausgestaltet und dazu bestimmt ist, insbesondere unelastisch an einem aufzunehmenden Wellenschlauch (nicht gezeigt) befestigt zu werden. Alternativ oder ergänzend kann die Wellenschlauchaufnahme 340 auch dazu eingerichtet sein, an die Feder 320 angedrückt zu werden, sodass die Wellenschlauchaufnahme 340 eine Bewegung der Feder 320 nachvollzieht. Über diese Vorrichtungselemente hinaus weist die in die in der Figur 8 gezeigte Vorrichtung jedoch noch das optisch erfassende Sensorelement 360, das in dem in der Figur 7 schematisch gezeigten im Wesentlichen quaderförmigen Vorrichtungsinnenraumabschnitt 350 angeordnet ist, und das Reflexionselement 370, welches ebenfalls in diesem im Wesentlichen quaderförmigen Vorrichtungsinnenraumabschnitt 350 angeordnet ist, auf. Der im Wesentlichen quaderförmige Vorrichtungsinnenraumabschnitt 350 selbst ist in der Figur 8 aus Übersichtsgründen nicht gezeigt und nur durch das teilweise gezeigte Mantelelement 300a schematisch angedeutet. Das Sensorelement 360 ist an einer durch das Mantelelement 300a ausgeformten Wandung des im Wesentlichen quaderförmigen Vorrichtungsinnenraumabschnitts 350 befestigt.

Das Reflexionselement 370 ist im gezeigten Beispiel an der Wellenschlauchaufnahme 340 fixiert. Das Reflexionselement 370 folgt daher der Bewegung der Wellenschlauchaufnahme 340, die wiederum unmittelbar zur Federauslenkung oder Federausdehnung der Feder 320 korrespondiert, da die Wellenschlauchaufnahme 340 zumindest im Wesentlichen unelastisch an der Feder 320 befestigt ist und/oder da die Wellenschlauchaufnahme 340 die Bewegung der Feder 320 nachvollzieht. Die Wellenschlauchaufnahme 340 ist ferner dazu eingerichtet, zumindest im Wesentlichen unelastisch an einem durch die Vorrichtung aufgenommenen Wellenschlauch (nicht gezeigt) befestigt zu werden, sodass die Wellenschlauchaufnahme 340 sowie das Reflexionselement 370 einer Bewegung des aufgenommenen Wellenschlauchs unmittelbar folgen, wobei die Position und/oder Bewegung der Wellenschlauchaufnahme 340 und des Reflexionselements 370 unmittelbar zur Federauslenkung oder Federausdehnung der Feder 320 korrespondieren.

Das in der Figur 8 gezeigte Sensorelement 360 ist dazu eingerichtet, einen Strahl aus Laserlicht auf das Reflexionselement 370 zu richten und anhand einer Laufzeitmessung und/oder durch eine Triangulation des durch das Reflexionselement 370 reflektierten und anschließend wieder durch das Sensorelement 360 erfassten Laserlichts eine Distanz zwischen dem Sensorelement 360 und dem Reflexionselement 370 zu ermitteln. Das Laserlicht kann insbesondere infrarotes Laserlicht sein. In einem zweiten Schritt kann das Sensorelement 360 oder eine externe Auswertevorrichtung (nicht gezeigt) eine Federauslenkung oder eine Federausdehnung der Feder 320 ermitteln.

Ein Vorteil der Vorrichtung mit dem im Vorrichtungsinnenraum angeordneten Sensorelement 360 ist, dass eine Belastung und/oder Bewegung der Feder 120 und/oder Wellenschläuche ohne eine manuelle Kontrolle mit externen Sensoren, gemessen oder erfasst werden kann. Die Mess- oder Erfassungsergebnisse des Sensorelements 360 können zum Beispiel mit einer Funkverbindung an eine Auswertevorrichtung (nicht gezeigt) übertragen werden. Die Auswertevorrichtung kann die Messergebnisse auswerten und/oder aufbereiten, über einen längeren Zeitraum speichern und/oder vergleichen und/oder an einen Bediener der Auswertevorrichtung ausgeben. Dieses erleichtert das Erkennen von nicht optimal angeordneten Aufnahmevorrichtungen oder einer zumindest nicht optimal ausgeführten Schlauchführung.

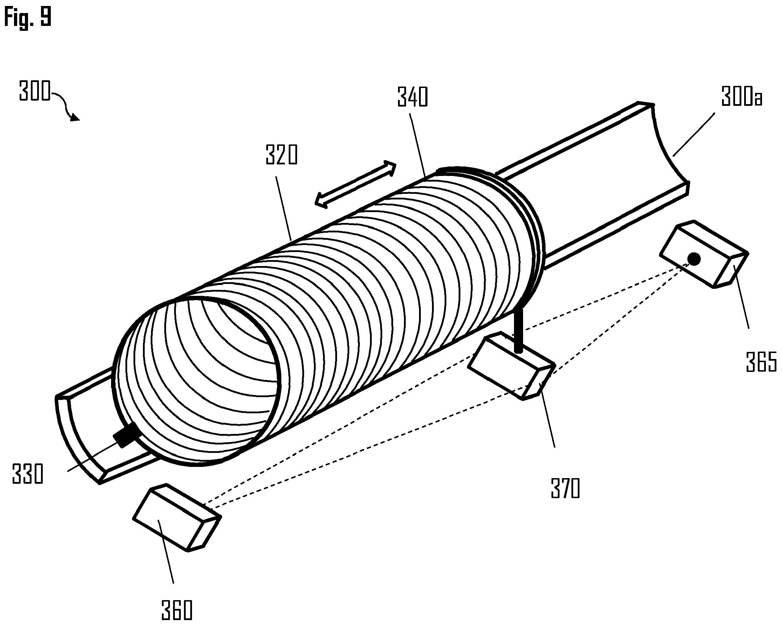

Eine Weiterbildung der in der Figur 8 gezeigten Vorrichtung 300 wird in der Figur 9 gezeigt. Zusätzlich zu den in der Figur 8 gezeigten und vorangehend beschriebenen Vorrichtungselementen weist die in der Figur 9 gezeigte Weiterbildung das zusätzliche Sensorelement 365 auf, das an einer der Wandung mit dem daran befestigten Sensorelement 360 gegenüberliegenden weiteren Wandung des im Wesentlichen quaderförmigen Vorrichtungsinnenraumabschnitts 350 befestigt ist. Analog zu dem Sensorelement 360 ermittelt auch das zusätzliche Sensorelement 365 einen Abstand zwischen sich und dem Reflexionselement 370, indem es einen Strahl aus Laserlicht auf eine Oberfläche des Reflexionselements 370 richtet und mittels einer Laufzeitmessung und/oder einer Triangulation des reflektierten Strahls aus Laserlicht eine Distanz oder einen Abstand zwischen sich und dem Reflexionselement 370 ermittelt. Analog zu dem Sensorelement 360 kann auch das zusätzliche Sensorelement 365 und/oder die nicht gezeigte Auswertevorrichtung, mit der auch das zusätzliche Sensorelement 365 über eine Funkverbindung kommunizieren kann, basierend auf der ermittelten Distanz eine Federausdehnung oder Federauslenkung der Feder 320 ermitteln. Optional können die Sensorelemente 360, 365, welche in einer nicht gezeigten Weiterbildung auch untereinander mittels einer Funkverbindung kommunizieren können, und/oder die Auswerteeinrichtung die ermittelten Werte für die Federausdehnung oder Federauslenkung vergleichen und mitteln, um eine Genauigkeit der Werte für die Federausdehnung oder Federauslenkung zu verbessern.

Wie in der Figur 9 gezeigt kann das Reflexionselement 370 insbesondere in einem Raum zwischen den beiden Sensorelementen 360 und 365 angeordnet werden, wobei die Sensorelemente 360 und 365 jeweils unterschiedliche, einander gegenüberliegende Oberflächen des Reflexionselements 370 mit einem Laserstrahl beleuchten oder anstrahlen können, um eine Federauslenkung oder Federausdehnung der Feder 320 zu ermitteln.

In Weiterbildungen der hier gezeigten Vorrichtungen können die Sensorelemente 360 und/oder 365 und/oder die nicht gezeigte Auswertevorrichtung dazu eingerichtet sein, eine über eine Einsatzdauer auftretende Federermüdung, eine Federverkantung im Vorrichtungsinnenraum, eine Wellenschlauchauslenkung und/oder eine Wellenschlauchposition oder Wellenschlauchabschnittsposition zu erfassen oder anhand von erfassten und/oder aufgezeichneten Messdaten, zum Beispiel durch einen Vergleich mit (vor-)gespeicherten Soll-Daten, zu ermitteln. Die Sensorelemente und/oder die Auswertevorrichtung können zudem dazu eingerichtet sein, im Falle einer Abweichung der ermittelten oder erfassten Parameter von einem vorbestimmten oder gespeicherten Sollwertkorridor einen Alarm und/oder einen Wartungshinweis an einen Bediener oder an eine mit der Wartung der Vorrichtung beauftragte Person auszugeben.

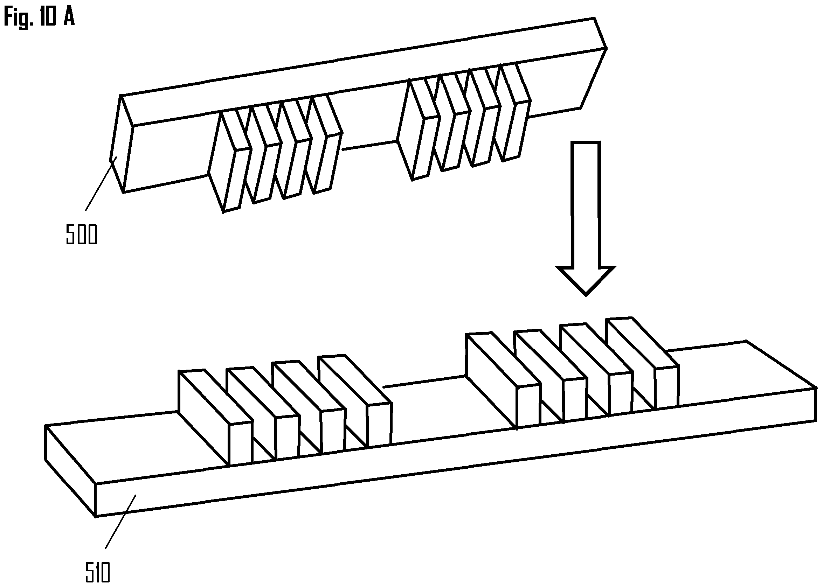

Figur 10 A zeigt schematisch ein Beispiel für das Zusammenwirken eines Befestigungselements 500 mit einer Zahnung und einer Befestigungsvorrichtung 510 mit einer korrespondierenden Gegenzahnung.

Das Befestigungselement 510 kann ein Teil einer Vorrichtung zur Aufnahme von Wellenschläuchen (nicht gezeigt) sein und insbesondere an einem Aufnahmeelement mit einem Vorrichtungsinnenraum angeordnet sein. Die Befestigungsvorrichtung 510 kann Teil einer Maschine, zum Beispiel eines Roboters, oder eines Gebäudeelements sein und/oder an einer Maschine, zum Beispiel an einem Roboter, oder an einem Gebäudeelement angeordnet sein.

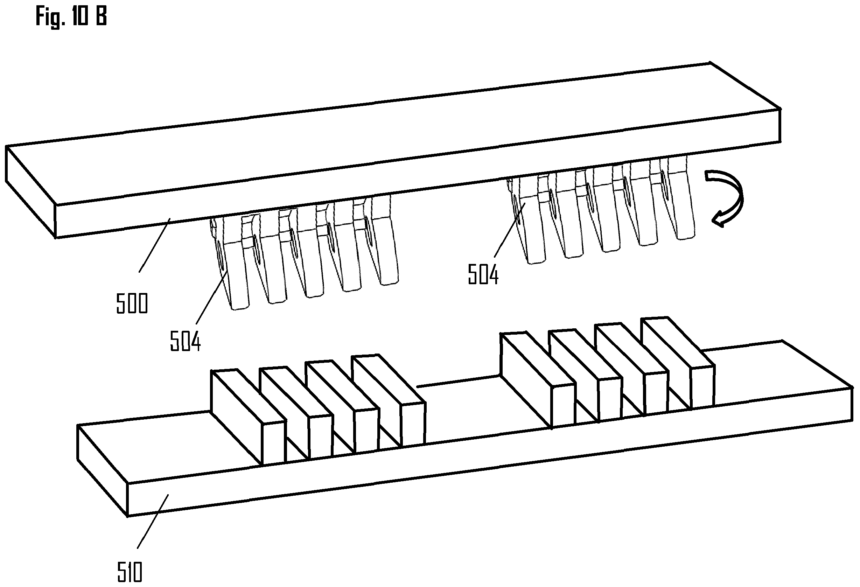

Sowohl das Befestigungselement 500 als auch die Befestigungsvorrichtung 510 weisen eine Zahnung aus mehreren zueinander gleichartig ausgeformten prismenförmigen Materialvorsprüngen auf. Im gezeigten Beispiel sind die Zahnungen des Befestigungselements 500 und der Befestigungsvorrichtung 510 zueinander gleichartig ausgestaltet. Die Zahnungen des Befestigungselements 500 und der Befestigungsvorrichtung 510 sind zudem dazu eingerichtet, ineinander einzugreifen und in eine formschlüssige Anlageposition zur Verbindung des Befestigungselements 510 und der Befestigungsvorrichtung 500 gebracht zu werden. Wie durch die Figur 10 einsichtig, existieren mehrere verschiedene Anordnungs- oder Befestigungsoptionen zur Anordnung des Befestigungselements an der Befestigungsvorrichtung. Insbesondere kann durch eine Verschiebung oder Verlagerung des Befestigungselements 500 in einer Längenrichtung relativ zu der Befestigungsvorrichtung 510 eine Anordnungs- oder Befestigungsposition des Befestigungselements 500 an der Befestigungsvorrichtung 510 variiert werden. In einem Extremfall können die Zahnungen des Befestigungselements 500 und der Befestigungsvorrichtung 510 zu Beispiel derart miteinander in Anlage gebracht werden, dass jeweils alle Materialvorsprünge des Befestigungselements 500 in einer Anlage mit zumindest einem Materialvorsprung der Befestigungsvorrichtung 510 angeordnet sind. In einem anderen Beispiel können die Zahnungen des Befestigungselements 500 und der Befestigungsvorrichtung 510 derart miteinander in Anlage gebracht werden, dass nur ein Teil der Materialvorsprünge des Befestigungselements 500 jeweils in einer Anlage mit zumindest einem Materialvorsprung der Befestigungsvorrichtung 510 angeordnet ist. Hierdurch kann eine Anordnungs- oder Befestigungsposition des Befestigungselements 500 an der Befestigungsvorrichtung 510 variiert werden.

Die Figur 10 B zeigt ein weiteres Beispiel für das Zusammenwirken eines Befestigungselements 500 mit einer Zahnung und einer Befestigungsvorrichtung 510 mit einer korrespondierenden Gegenzahnung.

Die Zahnung des Befestigungselements 500 ist an einem Verriegelungsfortsatz 504 des Befestigungselements 500 angeordnet. Der Verriegelungsfortsatz 504 ist schwenkbar an einem Befestigungselementgrundkörper angeordnet.

Die an dem Verriegelungsfortsatz 504 angeordnete Zahnung ist dazu eingerichtet, durch eine Schwenkung des Verriegelungsfortsatzes 504 um eine Befestigungselementachse formschlüssig mit zumindest einem Teil der Zahnung der Befestigungsvorrichtung 510 in Eingriff gebracht zu werden. Durch eine entgegengesetzte Schwenkung des Verriegelungsfortsatzes 504 um die Befestigungselementachse kann die Zahnung des Befestigungselements 500 wieder von der Zahnung der Befestigungsvorrichtung 510 gelöst werden.

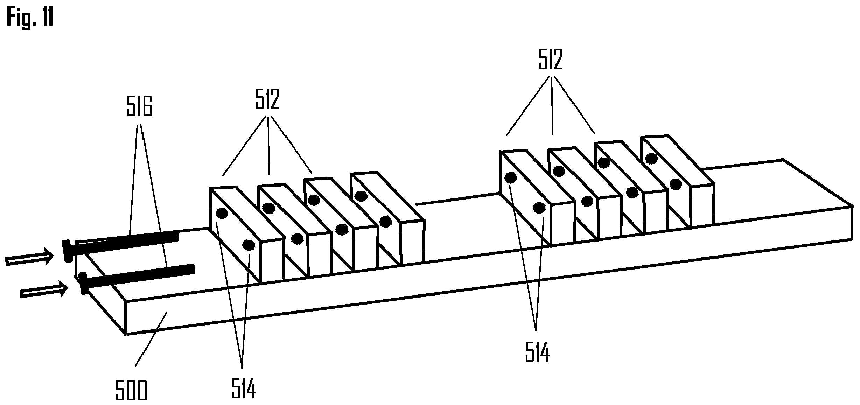

Figur 11 zeigt schematisch ein weiteres Beispiel für ein Befestigungselement 500 einer Vorrichtung zur Aufnahme von Wellenschläuchen. Obwohl die Figur 11 aus Übersichtsgründen nur das an einem Aufnahmeelement einer Vorrichtung befestigte Befestigungselement 500 zeigt, ist es selbstverständlich, dass eine zu dem gezeigten Befestigungselement 500 korrespondierende, hier nicht gezeigte, Befestigungsvorrichtung jeweils zu den in der Figur 11 gezeigten Merkmalen korrespondierende Merkmale aufweisen kann.

Wie mit der Figur 11 gezeigt, können die prismaförmigen Materialvorsprünge 512, welche die Zahnung des gezeigten Befestigungselements 500 ausbilden, jeweils mehrere vorbereitete Materialausnehmungen oder Öffnungen 514 aufweisen, die für ein Zusammenwirken mit den gezeigten Befestigungsbolzen 516 ausgebildet sind. Mit anderen Worten sind die Materialausnehmungen oder Öffnungen 514 jeweils zur Aufnahme eines Befestigungsbolzens 516 ausgebildet.

Wird das in der Figur 11 gezeigte Befestigungselement 500 zumindest teilweise formschlüssig an einer Befestigungsvorrichtung 510 angeordnet, wobei auch die Zahnung und/oder die Materialvorsprünge der Befestigungsvorrichtung 510 jeweils zu der Zahnung und/oder zu den Materialvorsprüngen des Befestigungselements 500 korrespondierende Materialausnehmungen oder Öffnungen, die jeweils zur Aufnahme eines Befestigungsbolzens 516 ausgebildet sind, aufweisen, kann das Befestigungselement 500 an der Befestigungsvorrichtung 510 mit Hilfe der Befestigungsbolzen 516 lösbar befestigt werden.

Mit anderen Worten können das Befestigungselement 500 und die Befestigungsvorrichtung 510 zumindest teilweise formschlüssig in Anlage miteinander angeordnet werden, wobei zumindest ein Teil der Zahnung des Befestigungselements 500 in zumindest einen Teil der Zahnung der Befestigungsvorrichtung 510 eingreift. Anschließend kann die zumindest teilweise formschlüssige Anlage des Befestigungselements 500 an der Befestigungsvorrichtung 510 dadurch fixiert und/oder verbessert werden, dass die Befestigungsbolzen 516 in die Öffnungen der jeweiligen Materialvorsprünge des Befestigungselements 500 und der Befestigungsvorrichtung 510 hinein angeordnet werden, sodass diese ein Ablösen des Befestigungselements 500 und von der Befestigungsvorrichtung 510 blockieren.

Die Befestigungsbolzen können in einigen Ausführungsformen (nicht gezeigt) Einrastklinken oder Einrastfortsätze aufweisen, die insbesondere zumindest teilweise elastisch deformierbar sein und dazu dienen können, eine Fixierung oder Befestigung der Befestigungsbolzen in den Materialausnehmungen oder Öffnungen der Materialvorsprünge herzustellen oder zu gewährleisten. Die Befestigungsbolzen können sowohl ohne ein zusätzliches Werkzeug von einem Bediener oder Monteur der Vorrichtung in die Öffnungen der Materialvorsprünge eingeführt als auch ohne ein zusätzliches Werkzeug von einem Bediener oder Monteur der Vorrichtung wieder aus den Öffnungen der Materialvorsprünge entfernt werden. Die Anordnung der Vorrichtung zur Aufnahme von Wellenschläuchen an einer Befestigungsvorrichtung ist hierdurch schnell und effizient zu bewältigen.

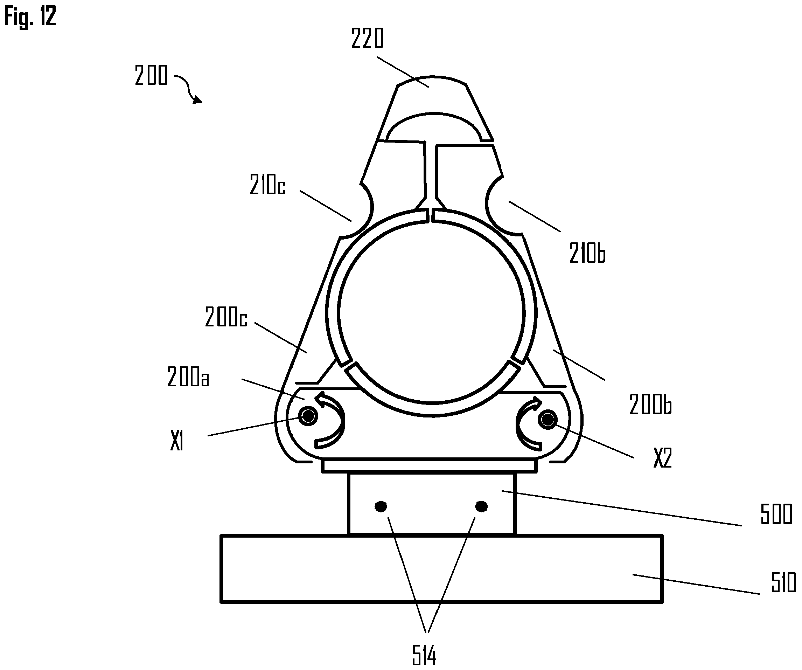

Ein Beispiel für eine solche Vorrichtung zur Aufnahme von Wellenschläuchen mit einem Befestigungselement 500, die an einer Befestigungsvorrichtung 510 befestigt ist, zeigt zum Beispiel die Figur 12. Wie die Figur 12 in einer Schnittdarstellung zeigt, kann eine Vorrichtung zur Aufnahme von Wellenschläuchen zum Beispiel ein Aufnahmeelement 200 mit mehreren Mantelelementen 200a, 200b, 200c und ein an einem der Mantelelemente angeordnetes Befestigungselement 500 aufweisen. Die Vorrichtung mit dem Befestigungselement 500 kann auf der in einer Schnittdarstellung gezeigten Befestigungsvorrichtung 510 angeordnet sein. Optional können die Befestigungsbolzen 516 (in der Figur 12 nicht gezeigt) in die gezeigten Öffnungen 514 eingeführt werden, um eine Ablösung des Befestigungselements 500 von der Befestigungsvorrichtung 510 zu blockieren.

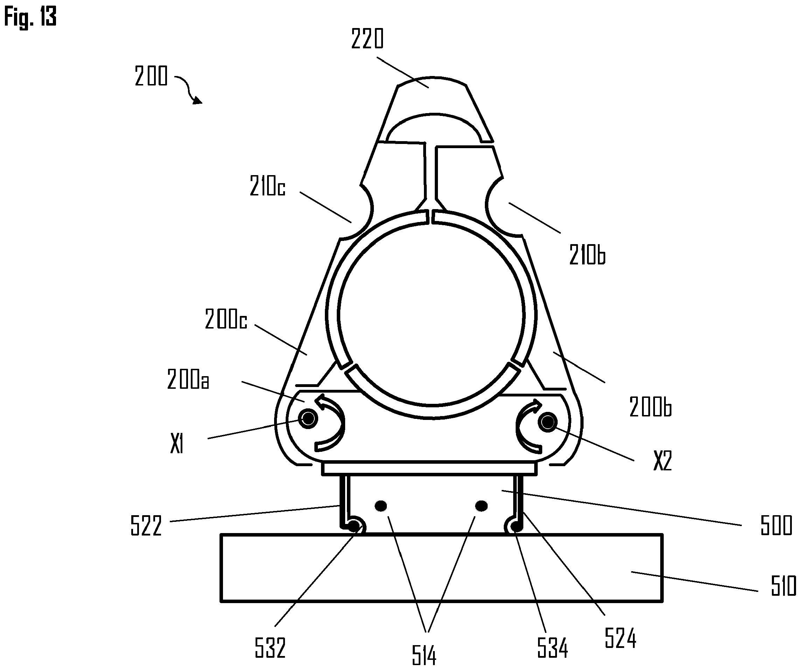

Alternativ oder ergänzend zu den Befestigungsbolzen 516 kann das Befestigungselement 500, wie in der Figur 13 gezeigt, weiter ein erstes zumindest teilweise elastisch deformierbares Einrastelement 522 aufweisen, das dazu angeordnet und ausgebildet ist, in einer ersten Unterschneidung 532 in einer ersten Seitenfläche einer Befestigungsvorrichtung 510 angeordnet zu werden. Eine Seitenfläche einer Befestigungsvorrichtung 510 kann selbstverständlich auch die Seitenfläche einer Zahnung der Befestigungsvorrichtung 510 sein. Zusätzlich weist die in der Figur 13 gezeigte Vorrichtung ein zweites zumindest teilweise elastisch deformierbares Einrastelement 524 auf, das dazu angeordnet und ausgebildet ist, in einer zweiten Unterschneidung 534 in einer der ersten Seitenfläche gegenüberliegenden zweiten Seitenfläche der Befestigungsvorrichtung angeordnet zu werden.

Das erste und das zweite Einrastelement 522, 524 sind zueinander asymmetrisch ausgebildet. In dem in der Figur 13 gezeigten Ausführungsbeispiel sind das erste und das zweite zumindest teilweise elastisch deformierbare Einrastelement 522, 524 jeweils mit einer zumindest teilweise elastisch deformierbaren Wandung, die jeweils einen Materialvorsprung aufweist, ausgeführt. Der Materialvorsprung des ersten deformierbaren Einrastelements 522 steht hierbei weiter oder höher von der zumindest teilweise elastisch deformierbaren Wandung des Einrastelements 522 ab als der Materialvorsprung des zweiten elastisch deformierbaren Einrastelements 524 von dessen zumindest teilweise elastisch deformierbarer Wandung. Die Unterschneidungen 532 und 534 in den Seitenflächen der Befestigungsvorrichtung 510 sind hierzu korrespondierend ausgeformt. In einer nicht gezeigten Ausführungsform kann auch die Zahnung des Befestigungselements 500 zu den Unterschneidungen 532, 534 in den Seitenflächen der Befestigungsvorrichtung korrespondierende Ausnehmungen aufweisen.

Ein Vorteil der zueinander asymmetrischen Einrastelemente ist, dass das Befestigungselement, insbesondere mit einer Drehbewegung, einfach und ohne zusätzliches Werkzeug an der Befestigungsvorrichtung angeordnet und befestigt werden kann, ein unbeabsichtigtes Lösen des Befestigungselements von der Befestigungsvorrichtung jedoch erheblich erschwert ist. Aufgrund der asymmetrischen Ausgestaltung der Einrastelemente 522, 524 ist zum Lösen des Befestigungselements von der Befestigungsvorrichtung eine jeweils zumindest teilweise ausgeführte Kipp- und Zugbewegung notwendig, welche zumindest nur selten unbeabsichtigt durch einen Bediener der Vorrichtung ausgeführt wird oder durch eine Kollision der Vorrichtung mit anderen Maschinenteilen zustande kommt.

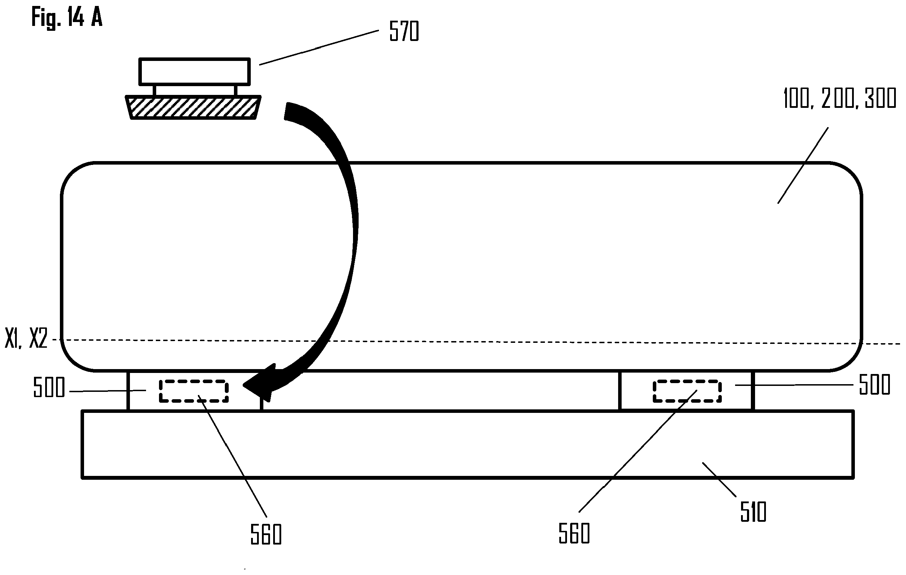

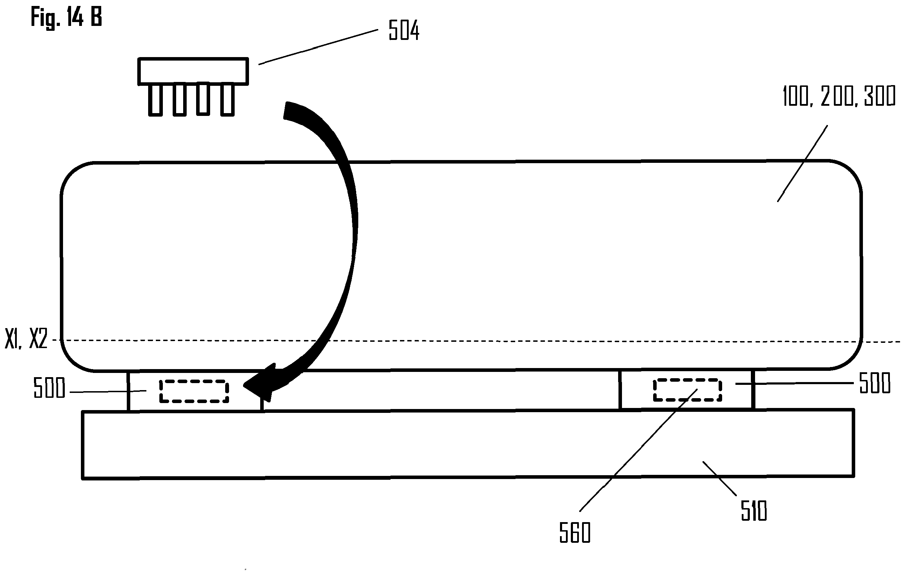

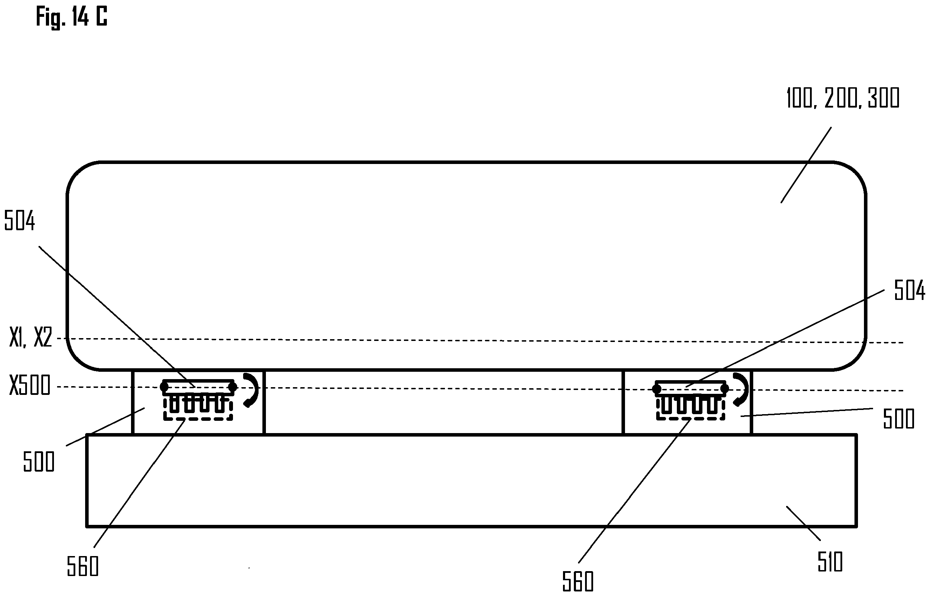

Alternativ oder ergänzend zu den Befestigungsbolzen 516 und/oder den elastisch zumindest teilweise deformierbaren Einrastelementen 522, 524 kann das Befestigungselement 500 auch mit Befestigungsclips 570, die in einer Richtung quer zu den Rotationsachsen X1 und/oder X2 in das Befestigungselement 500 und in die Befestigungsvorrichtung 510 eingebracht werden, an der Befestigungsvorrichtung 510 fixiert werden. Die Figur 14 zeigt schematisch ein Beispiel für eine Vorrichtung zur Aufnahme von Wellenschläuchen mit einem Befestigungselement 500, wobei die Vorrichtung mit dem Befestigungselement 500 auf einer Befestigungsvorrichtung 510 angeordnet und mit Befestigungsclips 570 fixiert ist, in einer Schnittdarstellung.

Wie in der Figur 14 A schematisch gezeigt, können das Befestigungselement 500, die Zahnung des Befestigungselements 500 und/oder die Zahnung der Befestigungsvorrichtung 510 seitliche Ausnehmungen aufweisen, die im Falle einer Anordnung des Befestigungselements auf der Befestigungsvorrichtung gemeinsam eine Aufnahmeöffnung 560, zum Beispiel für einen Befestigungsclip 570, ausbilden können. Der Befestigungsclip kann seitlich in das Befestigungselement 500 und in die Befestigungsvorrichtung 510 eingeführt werden kann. Insbesondere können, wie in der Figur 14 A gezeigt, die Zahnungen des Befestigungselements 500 und der Befestigungsvorrichtung 510 Ausnehmungen aufweisen, die im Zusammenwirken, also nach einer Anordnung des Befestigungselements 500 an/auf der Befestigungsvorrichtung 510 eine Aufnahmeöffnung 560 für einen Befestigungsclip 570 zumindest mitausbilden oder mitformen. Darüber hinaus kann die Aufnahmeöffnung 560 auch in eine Seitenfläche oder Wandung des Befestigungselements 500 oder der Befestigungsvorrichtung 510 (mit-)eingebracht sein. Zum Beispiel kann die Aufnahmeöffnung 560 auch in einer zumindest teilweise elastisch deformierbaren Wandung zumindest eines der Einrastelemente 522, 524, angeordnet sein.

Der oder die Befestigungsclip/s 570 ist/sind zumindest teilweise elastisch deformierbar und/oder weist/weisen zumindest teilweise elastisch deformierbare Materialabschnitte und/oder zumindest teilweise elastisch deformierbare Bauelemente auf. Weiter ist/sind der/die Befestigungsclip/s 570 dazu ausgebildet, derart, insbesondere seitlich, in eine der Aufnahmeöffnungen 560 hinein angeordnet und/oder positioniert zu werden, dass er/sie ein Lösen des Befestigungselements 500 von der Befestigungsvorrichtung 510 blockiert/blockieren. Ein Befestigungsclip 570 kann sowohl ohne ein zusätzliches Werkzeug von einem Bediener oder Monteur der Vorrichtung in eine Aufnahmeöffnung 560 eingeführt als auch ohne ein zusätzliches Werkzeug von einem Bediener oder Monteur der Vorrichtung wieder aus der Aufnahmeöffnung 560 entfernt werden. Die Anordnung der Vorrichtung zur Aufnahme von Wellenschläuchen an einer Befestigungsvorrichtung ist hierdurch schnell und effizient zu bewältigen.

Weiter zeigen die Figuren 14 B und 14C schematisch, dass die Aufnahmeöffnung 560 des Befestigungselements 500 auch dazu eingerichtet sein kann, den Verriegelungsfortsatz 504 des Befestigungselements 500 aufzunehmen. Wie beschrieben, kann der Verriegelungsfortsatz 504 die Zahnung des Befestigungselements 500 aufweisen. Durch die Anordnung des Verriegelungsfortsatzes 504 in der Aufnahmeöffnung 560 des Befestigungselements 500 kann die Zahnung des Befestigungselements 500 mit der Zahnung der Befestigungsvorrichtung 510 in Eingriff und/oder in Anlage gebracht werden.

Wie in der Figur 14 C schematisch gezeigt, kann der Verriegelungsfortsatz 504 so an dem Befestigungselement 500 angeordnet sein, dass er durch eine Schwenkbewegung um die Befestigungselementachse X500, welche parallel zu den Rotationsachsen X1 und X2 angeordnet sein kann, in die Aufnahmeöffnung 560 eingebracht werden kann. Hierdurch kann die Zahnung des Befestigungselements 500 mit der Zahnung der Befestigungsvorrichtung 510 in Eingriff und/oder in Anlage gebracht werden. Mit anderen Worten kann der Verriegelungsfortsatz 504 schwenkbar an einem anderen Teil des Befestigungselements 500 angeordnet sein, wobei die an dem Verriegelungsfortsatz 504 angeordnete Zahnung mit der Zahnung der Befestigungsvorrichtung 510 in Eingriff und/oder Anlage gebracht werden kann.

Optional kann der Verriegelungsfortsatz 504 ein elastisch deformierbares Verriegelungsfortsatzeinrastelement (nicht gezeigt) aufweisen, das zum Beispiel analog zu dem in der Figur 14A gezeigten Befestigungsclip 570 ausgebildet und dazu eingerichtet ist, den Verriegelungsfortsatz 504 in der Aufnahmeöffnung 560 zu fixieren, nachdem die Zahnung des Befestigungselements 500 und die Zahnung der Befestigungsvorrichtung 510 miteinander in Eingriff gebracht worden sind.

Es versteht sich, dass die zuvor erläuterten beispielhaften Ausführungsformen nicht abschließend sind und den hier offenbarten Gegenstand nicht beschränken. Insbesondere ist für den Fachmann ersichtlich, dass er die beschriebenen Merkmale beliebig miteinander kombinieren kann und/oder verschiedene Merkmale weglassen kann, ohne dabei von dem hier offenbarten Gegenstand abzuweichen.

Die folgenden Beschreibungsseiten 55 bis 58 enthalten bevorzugte Ausführungsformen.

Ausführungsform 1. Vorrichtung zur Aufnahme von Kabelführungen, insbesondere von Wellenschläuchen, aufweisend
ein Aufnahmeelement (110, 200, 300) mit mehreren Mantelelementen (110a, 110b; 200a, 200b, 200c; 300a, 300b, 300c), die dazu eingerichtet sind, gemeinsam einen Vorrichtungsinnenraum mit zumindest zwei Vorrichtungsöffnungen zumindest teilweise zu umschließen,
zumindest ein Befestigungselement (500), das an dem Aufnahmeelement angeordnet und dazu ausgebildet ist, lösbar an einer Befestigungsvorrichtung (510) angeordnet zu werden,
wobei jedes der mehreren Mantelelemente um eine Rotationsachse (X1, X2) schwenkbar an zumindest einem weiteren Mantelelement angeordnet ist.

Ausführungsform 2. Vorrichtung nach dem vorangegangenen Anspruch, weiter aufweisend
eine Verschlussvorrichtung (220), die an einem oder an mehreren Mantelelementen angeordnet und dazu ausgebildet ist, zumindest zwei der mehreren Mantelelemente lösbar aneinander zu befestigen, wobei
die Verschlussvorrichtung insbesondere zumindest ein in einer zu der/den Rotationsachse/n parallelen Richtung verschiebliches Verriegelungselement (226) aufweist, welches zur Herstellung und/oder Freigabe der lösbaren Befestigung eingerichtet ist.

Ausführungsform 3. Vorrichtung nach dem vorangegangenen Anspruch, wobei
die Verschlussvorrichtung zumindest eine Verschlussschiene (224) aufweist, die an zumindest einem der schwenkbaren Mantelelemente angeordnet ist, wobei
die Verschlussschiene zumindest abschnittsweise einen zumindest teilweise T-förmigen Querschnitt aufweist, und/oder
die Verschlussschiene dazu eingerichtet ist, zumindest abschnittsweise mit einem Teil eines weiteren Mantelelements, insbesondere formschlüssig, in Anlage gebracht zu werden, und/oder gemeinsam mit dem Teil des weiteren Mantelelements zumindest abschnittsweise einen zumindest teilweise T-förmigen Querschnitt auszubilden, und/oder
das Verriegelungselement dazu eingerichtet ist, zumindest abschnittsweise mit der Verschlussschiene, insbesondere formschlüssig, in Anlage gebracht zu werden.

Ausführungsform 4. Vorrichtung nach dem vorangegangenen Anspruch, wobei
die Verschlussschiene und/oder eines der Mantelelemente eine oder mehrere Rastnasen aufweisen, die dazu eingerichtet sind, das verschiebliche Verriegelungselement in einer vorbestimmten Position lösbar zu fixieren und/oder einer Verschiebung oder Bewegung des Verriegelungselements in einer zu der/den Rotationsachse/n parallelen Richtung einen Druckwiderstand entgegenzusetzen.

Ausführungsform 5. Vorrichtung nach dem vorangegangenen Anspruch, wobei
die Rastnasen dazu eingerichtet sind, das verschiebliche Verriegelungselement in drei verschiedenen vorbestimmten Positionen lösbar zu fixieren und/oder einer Verschiebung oder Bewegung des Verriegelungselements in einer zu der/den Rotationsachse/n parallelen Richtung einen Druckwiderstand entgegenzusetzen, wenn das Verriegelungselement aus einer der drei vorbestimmten Positionen herausbewegt wird.

Ausführungsform 6. Vorrichtung nach einem der Ansprüche 2 bis 5, wobei
das Verriegelungselement, insbesondere in einer im Wesentlichen zu der/den Rotationsachse/n orthogonalen Richtung verlaufende, Handhabungsrillen (228) aufweist, und/oder
das Verriegelungselement dazu eingerichtet ist, formschlüssig mit einem Zentralelement (222) in Anlage gebracht zu werden, insbesondere wenn die Verschlussvorrichtung zumindest zwei der mehreren Mantelelemente lösbar aneinander befestigt.

Ausführungsform 7. Vorrichtung nach einem der vorangegangenen Ansprüche, wobei
eines oder mehrere der Mantelelemente, insbesondere an einer Vorrichtungsöffnung, eine in den Innenraum hinein ausgeformte Führungsgeometrie aufweist, die dazu geeignet ist, eine Positionierung einer Kabelführung oder eines Wellenschlauchs vorzugeben und/oder zu beeinflussen und/oder zu halten.

Ausführungsform 8. Vorrichtung nach einem der vorangegangenen Ansprüche, weiter aufweisend
zumindest ein im Vorrichtungsinnenraum angeordnetes Längenausgleichselement mit zumindest einer Feder (120), die an einem der Mantelelemente und/oder an einer Führungsgeometrie fixiert ist und eine Kabelführungs- oder Wellenschlauchaufnahme (140) aufweist, wobei die Kabelführungs- oder Wellenschlauchaufnahme dazu eingerichtet ist, an einer Kabelführung oder an einem Wellenschlauch angeordnet zu werden, wobei
das Längenausgleichelement mit der zumindest einen Feder insbesondere dazu eingerichtet ist, eine an der Kabelführungs- oder Wellenschlauchaufnahme angeordnete Kabelführung, insbesondere einen Wellenschlauch, mit einer Materialspannung in einer zu der/den Rotationsachse/n parallelen Richtung aufzunehmen.

Ausführungsform 9. Vorrichtung nach einem der vorangegangenen Ansprüche, wobei
eines, mehrere und/oder alle Mantelelemente, insbesondere an einer Außenseite der Mantelelemente, eine Vertiefung, Sicke oder Nut aufweisen, wobei
die Mantelelemente insbesondere dazu eingerichtet sind, mit einer der Außenseite gegenüberliegenden Innenseite an einer durch das Aufnahmeelement aufgenommenen Kabelführung, insbesondere an einem Wellenschlauch, und/oder an dem Längenausgleichselement anzuliegen.

Ausführungsform 10. Vorrichtung nach einem der vorangegangenen Ansprüche, weiter aufweisend
zumindest ein Rotationselement, um das zumindest zwei der Mantelelemente um eine Rotationsachse schwenkbar gelagert sind, wobei
die zwei Mantelelemente, die um das Rotationselement schwenkbar gelagert sind, das Rotationselement vollständig umschließen.

Ausführungsform 11. Vorrichtung nach einem der vorangegangenen Ansprüche, wobei
der von den Mantelelementen umschlossene Vorrichtungsinnenraum einen zumindest im Wesentlichen zylinderförmigen Abschnitt aufweist, der zur Aufnahme des Längenausgleichselements und/oder zumindest eines Teils einer Kabelführung oder eines Wellenschlauchs und/oder einer Führungsgeometrie ausgebildet ist, und/oder
der von den Mantelelementen umschlossene Vorrichtungsinnenraum einen zumindest im Wesentlichen quaderförmigen Abschnitt aufweist, der insbesondere zur Aufnahme eines oder mehrerer Sensorelemente (360, 365) eingerichtet ist.

Ausführungsform 12. Vorrichtung nach einem der Ansprüche 8 bis 11, weiter aufweisend
zumindest ein Sensorelement (360, 365), das dazu eingerichtet ist, eine Federausdehnung der Feder des Längenausgleichselements zu erfassen, und/oder wobei
das zumindest eine Sensorelement ein optisch erfassendes Sensorelement ist.

Ausführungsform 13. Vorrichtung nach einem der vorangegangenen Ansprüche, wobei
das Befestigungselement dazu eingerichtet ist, mit einer Schraubverbindung an der Befestigungsvorrichtung angeordnet zu werden, und/oder
das Befestigungselement eine Zahnung aufweist und dazu eingerichtet ist, mit der Zahnung formschlüssig in eine Zahnung der Befestigungsvorrichtung einzugreifen.

Ausführungsform 14. Vorrichtung nach dem vorangegangenen Anspruch, wobei
das Befestigungselement dazu eingerichtet ist, mit Befestigungsbolzen (516) und/oder mit Befestigungsclips (570) lösbar an der Befestigungsvorrichtung befestigt zu werden, wobei
die Befestigungsbolzen und/oder die Befestigungsclips jeweils sowohl in vorbereitete Öffnungen in dem Befestigungselement als auch in vorbereitete Öffnungen in der Befestigungsvorrichtung eingreifen, und
wobei die Befestigungsbolzen und/oder die Befestigungsclips insbesondere jeweils in einer zu der/den Rotationsachse/n parallelen Richtung oder in einer zu der/den Rotationsachse/n orthogonalen Richtung in die vorbereiteten Öffnungen in dem Befestigungselement und in die vorbereiteten Öffnungen in der Befestigungsvorrichtung einführbar sind.

Ausführungsform 15. Vorrichtung nach einem der vorangegangenen Ansprüche, weiter aufweisend
eines oder mehrere Dichtungselemente, die jeweils an einer der Vorrichtungsöffnungen angeordnet und dazu eingerichtet sind, an einer zumindest teilweise aufgenommenen Kabelführung, insbesondere an einem zumindest teilweise aufgenommenen Wellenschlauch anzuliegen, wobei
die Dichtungselemente jeweils insbesondere dazu eingerichtet sind, die Vorrichtungsöffnung im Zusammenwirken mit der aufgenommenen Kabelführung oder dem aufgenommenen Wellenschlauch zumindest im Wesentlichen staub- und/oder flüssigkeitsdicht zu verschließen.

## Patentansprüche

1. Vorrichtung zur Aufnahme von Kabelführungen, insbesondere von Wellenschläuchen, aufweisend
ein Aufnahmeelement (110, 200, 300) mit zumindest drei Mantelelementen (200a, 200b, 200c; 300a, 300b, 300c), die dazu eingerichtet sind, gemeinsam einen Vorrichtungsinnenraum mit zumindest zwei Vorrichtungsöffnungen zumindest teilweise zu umschließen,
wobei jedes der mehreren Mantelelemente um eine Rotationsachse (X1, X2) schwenkbar an zumindest einem weiteren Mantelelement der zumindest drei Mantelelemente (200a, 200b, 200c; 300a, 300b, 300c) angeordnet ist.

2. Vorrichtung nach Anspruch 1, wobei die zumindest drei Mantelelemente (200a, 200b, 200c; 300a, 300b, 300c) schwenkbar oder rotierbar aneinander angeordnet sind.

3. Vorrichtung nach einem der vorangegangenen Ansprüche, weiter aufweisend
eine Verschlussvorrichtung (220), die an einem oder an mehreren Mantelelementen angeordnet und dazu ausgebildet ist, zumindest zwei der mehreren Mantelelemente lösbar aneinander zu befestigen, wobei
die Verschlussvorrichtung insbesondere zumindest ein in einer zu der/den Rotationsachse/n parallelen Richtung verschiebliches Verriegelungselement (226) aufweist, welches zur Herstellung und/oder Freigabe der lösbaren Befestigung eingerichtet ist.

4. Vorrichtung nach einem der vorangegangenen Ansprüche, weiter aufweisend
zumindest ein im Vorrichtungsinnenraum angeordnetes Längenausgleichselement mit zumindest einer Feder (120), die an einem der Mantelelemente fixiert ist und eine Kabelführungs- oder Wellenschlauchaufnahme (140) aufweist, wobei die Kabelführungs- oder Wellenschlauchaufnahme dazu eingerichtet ist, an einer Kabelführung oder an einem Wellenschlauch angeordnet zu werden, wobei
das Längenausgleichelement mit der zumindest einen Feder insbesondere dazu eingerichtet ist, eine an der Kabelführungs- oder Wellenschlauchaufnahme angeordnete Kabelführung, insbesondere einen Wellenschlauch, mit einer Materialspannung in einer zu der/den Rotationsachse/n parallelen Richtung aufzunehmen.

5. Vorrichtung nach einem der vorangegangenen Ansprüche, wobei
eines, mehrere und/oder alle Mantelelemente, insbesondere an einer Außenseite der Mantelelemente, eine Vertiefung, Sicke oder Nut aufweisen, wobei
die Mantelelemente insbesondere dazu eingerichtet sind, mit einer der Außenseite gegenüberliegenden Innenseite an einer durch das Aufnahmeelement aufgenommenen Kabelführung, insbesondere an einem Wellenschlauch, und/oder an dem Längenausgleichselement anzuliegen.

6. Vorrichtung nach einem der vorangegangenen Ansprüche, weiter aufweisend
zumindest ein Rotationselement, um das zumindest zwei der Mantelelemente um eine Rotationsachse schwenkbar gelagert sind, wobei
die zwei Mantelelemente, die um das Rotationselement schwenkbar gelagert sind, das Rotationselement vollständig umschließen.

7. Vorrichtung nach einem der vorangegangenen Ansprüche, wobei
der von den Mantelelementen umschlossene Vorrichtungsinnenraum einen zumindest im Wesentlichen zylinderförmigen Abschnitt aufweist, der zur Aufnahme des Längenausgleichselements und/oder zumindest eines Teils einer Kabelführung oder eines Wellenschlauchs ausgebildet ist, und/oder
der von den Mantelelementen umschlossene Vorrichtungsinnenraum einen zumindest im Wesentlichen quaderförmigen Abschnitt aufweist, der insbesondere zur Aufnahme eines oder mehrerer Sensorelemente (360, 365) eingerichtet ist.

8. Vorrichtung nach einem der vorhergehenden Ansprüche, weiter aufweisend
zumindest ein Sensorelement (360, 365), das dazu eingerichtet ist, eine Federausdehnung der Feder des Längenausgleichselements zu erfassen.

9. Vorrichtung nach einem der vorangegangenen Ansprüche, weiter aufweisend ein Befestigungselement (500), das an dem Aufnahmeelement angeordnet und dazu ausgebildet ist, lösbar an einer Befestigungsvorrichtung (510) angeordnet zu werden.

10. Vorrichtung nach Anspruch 9, wobei das Befestigungselement dazu eingerichtet ist, mit einer Schraubverbindung an der Befestigungsvorrichtung angeordnet zu werden, und/oder wobei
das Befestigungselement dazu eingerichtet ist, mit Befestigungsbolzen (516) und/oder mit Befestigungsclips (570) lösbar an der Befestigungsvorrichtung befestigt zu werden, wobei
die Befestigungsbolzen und/oder die Befestigungsclips jeweils sowohl in vorbereitete Öffnungen in dem Befestigungselement als auch in vorbereitete Öffnungen in der Befestigungsvorrichtung eingreifen, und
wobei die Befestigungsbolzen und/oder die Befestigungsclips insbesondere jeweils in einer zu der/den Rotationsachse/n parallelen Richtung oder in einer zu der/den Rotationsachse/n orthogonalen Richtung in die vorbereiteten Öffnungen in dem Befestigungselement und in die vorbereiteten Öffnungen in der Befestigungsvorrichtung einführbar sind.

11. Vorrichtung nach Anspruch 9 oder 10, wobei
das Befestigungselement ein erstes zumindest teilweise elastisch deformierbares Einrastelement aufweist, das dazu angeordnet und ausgebildet ist, in einer ersten Vertiefung in einer ersten Seitenfläche einer Befestigungsvorrichtung angeordnet zu werden, und
das Befestigungselement ein zweites zumindest teilweise elastisch deformierbares Einrastelement aufweist, das dazu angeordnet und ausgebildet ist, in einer zweiten Vertiefung in einer der ersten Seitenfläche gegenüberliegenden zweiten Seitenfläche einer Befestigungsvorrichtung angeordnet zu werden, wobei
das erste und das zweite elastisch deformierbare Einrastelement zueinander asymmetrisch ausgebildet sind.

12. Vorrichtung nach einem der vorangegangenen Ansprüche, weiter aufweisend
eines oder mehrere Dichtungselemente, die jeweils an einer der Vorrichtungsöffnungen angeordnet und dazu eingerichtet sind, an einer zumindest teilweise aufgenommenen Kabelführung, insbesondere an einem zumindest teilweise aufgenommenen Wellenschlauch anzuliegen, wobei
die Dichtungselemente jeweils insbesondere dazu eingerichtet sind, eine Vorrichtungsöffnung im Zusammenwirken mit der aufgenommenen Kabelführung oder dem aufgenommenen Wellenschlauch zumindest im Wesentlichen staub- und/oder flüssigkeitsdicht zu verschließen.

13. Vorrichtung nach einem der vorangegangenen Ansprüche, wobei
ein erstes und zweites Sensorelement (360, 365) im Vorrichtungsinnenraum angeordnet sind, wobei das erste und zweite Sensorelement (360, 365) dazu eingerichtet sind, eine Federausdehnung der Feder des Längenausgleichselements zu erfassen, und/oder
ein an der Feder des Längenausgleichselements angeordnetes Messelement, welches insbesondere ein an der Feder des Längenausgleichselements angeordnetes Reflexionselement ist, wobei
das Messelement insbesondere in einem Raum zwischen dem ersten und dem zweiten Sensorelement (360, 365) angeordnet ist.

14. Vorrichtung nach Anspruch 13, wobei
das erste und/oder das zweite Sensorelement ein optisch erfassendes Sensorelement ist, und/oder wobei
das erste und/oder das zweite Sensorelement dazu eingerichtet ist, Laserlicht zu emittieren und eine Federausdehnung der Feder des Längenausgleichselements mit einer Laufzeitmessung des durch das Messelement reflektierten Laserlichts zu ermitteln.

15. Ein Kabelführungsbefestigungssystem, insbesondere ein Wellenschlauchbefestigungssystem, das aufweist:
eine Vorrichtung nach einem der Ansprüche 1 bis 14,
eine Befestigungsvorrichtung und
eine Kabelführung, insbesondere einen Wellenschlauch, die zumindest teilweise im Vorrichtungsinnenraum des Aufnahmeelements der Vorrichtung nach einem der Ansprüche 1 bis 14 angeordnet ist.
